# EUROPEAN PATENT SPECIFICATION

(11) **EP 4 573 743 B1**
(45) Date of publication and mention of the grant of the patent: **04.11.2026**
(21) Application number: 23772627.8
(22) Date of filing: 17.08.2023
(51) Int. Cl.: H04L 69/04, H04L 69/00, H04L 69/28, H04L 69/324, H04L 49/111, H04L 49/1546, H04L 49/115, H04L 49/00, H04L 49/351

(54) **LINK TIMER FOR ETHERNET**
LINK-TIMER FÜR ETHERNET
MINUTERIE DE LIAISON POUR ETHERNET

(30) Priority: 19.08.2022 US 202263373016 P; 19.05.2023 US 202363503349 P
(43) Date of publication of application: 25.06.2025
(73) Proprietor: Tesla, Inc., Austin, TX 78725 (US)
(72) Inventor: QUINNELL, Eric C., Austin, TX 78725 (US); WILLIAMS, Douglas R., Austin, TX 78725 (US); HSIONG, Christopher, Austin, TX 78725 (US); NAVARRO HURTADO, Gerardo, Austin, TX 78725 (US)
(74) Representative: Liesegang, Eva
(86) International application number: PCT/US2023/030492
(87) International publication number: WO 2024/039794

(56) References cited:
- US-A1- 2017 237 659
- US-A1- 2020 294 401
- US-B1- 7 251 256
- PERIPHERAL COMPONENT INTERCONNECT SPECIAL INTEREST GROUP, PERIPHERAL COMPONENT INTERCONNECT SPECIAL INTEREST GROUP, 3855 SW 153RD DRIVE BEAVERTON, OR 97003, US, 27 September 2017 (2017-09-27), XP040726466

## Description

### TECHNICAL FIELD

The present disclosure relates to systems and methods for facilitating communications over networks. More particularly, embodiments of the present disclosure relate to flow control protocols implementable using hardware for communication over Ethernet based networks.

### BACKGROUND

The Institute of Electrical and Electronics Engineers (IEEE) has provided various standards for local area networks (LANs) collectively known as IEEE 802, including the IEEE 802.3 standard commonly known as Ethernet. The IEEE 802.3 Ethernet standard has specifications for physical media interfaces (Ethernet cables, fiber optics, backplanes, etc.), but not for flow controls of the communication. Protocols such as TCP/IP, RoCE, or InfiniBand can accelerate fabric flow controls. TCP/IP protocols generally have latencies that are typically in the order of milliseconds, while RoCE or InfiniBand have lossless and scaling specifications that may overly constrain the system.

As High-performance computing (HPC) and artificial intelligence (AI) training data centers become more prevalent, communication network fabrics with high bandwidth, low latency, lossy resilience for scale, distributed control, and as little software overhead as possible are desired. As such, it may be desirable to develop network flow control protocols operable over lossy Ethernet based networks with little or no central processing unit (CPU) involvement, while achieving lower latency than existing Ethernet based networks.
US 2017/237659 A1 discloses an approach for reliably transferring Ethernet packet data over a link layer and facilitating fabric-to-Ethernet and Ethernet-to-fabric gateway operations at matching wire speed and packet data rate. Ethernet header and payload data is extracted from Ethernet frames received at the gateway and encapsulated in fabric packets to be forwarded to a fabric endpoint hosting an entity to which the Ethernet packet is addressed. At the endpoint, fabric packets are regenerated, and the Ethernet packet data is de-encapsulated.
US 2020/294401 A1 refers to detection of a road hazard by a sensor in a vehicle. The sensor data is sent periodically, or upon detecting the anomaly, to a server over the Internet via a first wireless network, together with a vehicle identifier and its GNSS or GPS geographic location. The server analyzes the sensor data, and in response sends a notification message to a client device, such as a smartphone, or to a group of vehicles in close vicinity to the first vehicle, via a wireless network over the Internet. The received message may be used by each of the vehicles in the group for controlling, limiting, activating, or otherwise affecting an actuator operation, or may be used for notifying the driver using a dashboard display.
US 7,251,256 B1 discloses an approach for the distribution and utilization of synchronization within an asynchronous network is described herein. Synchronization is distributed through an asynchronous network via a synchronization symbol periodically inserted on the MAC layer.

### SUMMARY

The invention is defined by a first node for transmitting packets and a computer-implemented method according to the independent claims. Preferred embodiments are defined in the dependent claims.

The systems, methods and devices of this disclosure each have several innovative embodiments, no single one of which is solely responsible for all of the desirable attributes disclosed herein. Details of one or more implementations of the subject matter described in this specification are set forth in the accompanying drawings and the description below.

In some aspects, the techniques described herein relate to a first node for Ethernet based communication, the first node including: one or more processors configured to implement a transport layer hardware only Ethernet protocol.

In some aspects, the techniques described herein relate to a first node, wherein the Ethernet protocol is lossy.

In some aspects, the techniques described herein relate to a first node, wherein the one or more processors are further configured to implement a hardware replay architecture to replay packets transmitted to a second node over a first link, wherein the packets are stored in local storage of the first node, and wherein an order of the packets for replaying is specified in a linked-list.

In some aspects, the techniques described herein relate to a first node, wherein the first node is configured to transmit a packet to a second node with a single digit microsecond latency.

In some aspects, the techniques described herein relate to a first node, wherein the one or more processors are configured to implement a state machine configured to: operate in an open state where a link is open between the first node and a second node; transition from the open state to an intermediate close state; and transition from the intermediate close state to a close state to close the link in response to receiving a close acknowledgement from the second node.

In some aspects, the techniques described herein relate to a first node, further including an Ethernet port.

In some aspects, the techniques described herein relate to a first node, wherein the one or more processors are configured to determine to replay a packet on a link between the first node and a second node based on timing and status information associated with the link stored in a first-in-first-out (FIFO) memory, wherein entries of the FIFO memory are accessed according to ticks of a hardware link timer associated with a plurality of links.

In some aspects, the techniques described herein relate to a first node for Ethernet based communication, the first node including: one or more processors configured to implement a layer 2 hardware only Ethernet protocol.

In some aspects, the techniques described herein relate to a first node, wherein the one or more processors include a hardware only architecture configured to replay packets transmitted to a second node over a first link.

In some aspects, the techniques described herein relate to a first node, one or more processors further are configured to determine to replay a packet over a link associated with the first node based on timing and status information associated with the link stored in a first-in-first-out (FIFO) memory that is accessed based on ticks of a timer associated with multiple links.

In some aspects, the techniques described herein relate to a first node, wherein the first node is configured to open and close a link with a second node in an Ethernet based network, the first node including: a state machine hardware configured to: operate in an open state where the link is open between the first node and the second node; transition from the open state to an intermediate close state; and transition from the intermediate close state to a close state to close the link in response to receiving a close acknowledgement from the second node, wherein the first node is configured to operate in a lossy network.

In some aspects, the techniques described herein relate to a first node, wherein the state machine hardware implements a flow control protocol for a transport layer in hardware only.

In some aspects, the techniques described herein relate to a first node, wherein latency associated with the flow control protocol is less than 10 microseconds.

In some aspects, the techniques described herein relate to a first node, wherein the state machine hardware is configured to: transition from the close state to an intermediate open state; and transition from the intermediate open state to the open state.

In some aspects, the techniques described herein relate to a first node, wherein the state machine hardware transitions from the open state to the intermediate close state in response to transmitting a request to close the link to the second node or receiving the request to close the link from the second node.

In some aspects, the techniques described herein relate to a first node, wherein the state machine hardware transitions from the intermediate close state to the close state in response to transmitting an acknowledgement to close the link to the second node.

In some aspects, the techniques described herein relate to a first node, wherein the state machine hardware transitions from the intermediate close state to the close state without waiting for a period of time.

In some aspects, the techniques described herein relate to a first node, wherein, at the open state, the first node does not retransmit a packet until a non-acknowledgement of the packet is received from the second node or a predetermined timeout period expires without receiving the non-acknowledgement of the packet.

In some aspects, the techniques described herein relate to a first node, wherein, at the open state, the first node transmits at most N packets without pause, and wherein N is limited by a size of physical memory allocated to the first node.

In some aspects, the techniques described herein relate to a first node, further including: a hardware link timer associated with multiple links; and a hardware replay architecture configured to replay packets in hardware only.

In some aspects, the techniques described herein relate to a first node including: a hardware replay architecture configured to replay packets that are transmitted over a first link to a second node using an Ethernet protocol, wherein the hardware replay architecture includes: a local storage configured to store a linked-list including the packets, wherein the linked-list maintains an order of the packets for transmitting to the second node; and logic circuitry configured to: determine to replay a first packet of the packets in response to at least one of (a) a receipt of a non-acknowledgement of the first packet from the second node or (b) a timeout associated with the first packet; and retire a second packet of the packets in response to a receipt of an acknowledgement of the second packet from the second node, wherein the Ethernet protocol is lossy.

In some aspects, the techniques described herein relate to a first node, wherein the logic circuitry includes a plurality of pipelined stages, and wherein the logic circuitry determines to process data associated with the first link rather than a second link between the first node and the second node at a first pipelined stage of the plurality of pipelined stages.

In some aspects, the techniques described herein relate to a first node, wherein the logic circuitry determines to replay the first packet at a second pipelined stage of the plurality of pipelined stages.

In some aspects, the techniques described herein relate to a first node, wherein the logic circuitry determines, at the second pipelined stage of the plurality of pipelined stages, to replay a third packet of the packets and the first packet of the packets based on the order of the packets maintained by the linked-list.

In some aspects, the techniques described herein relate to a first node, wherein the logic circuitry determines to process data associated with the first link rather than the second link based on a link pointer, and wherein the logic circuitry updates the link pointer to point to the second link at a third pipelined stage of the plurality of pipelined stages.

In some aspects, the techniques described herein relate to a first node, wherein the first node and the second node are in an Ethernet based network, and wherein the first node communicates with the second node through an Ethernet switch.

In some aspects, the techniques described herein relate to a first node, wherein the first node includes a network interface processor (NIP) and a high-bandwidth memory (HBM), and wherein a bandwidth of the HBM is at least one gigabyte.

In some aspects, the techniques described herein relate to a first node for Ethernet based communication, the first node including: one or more processors configured to implement a transport layer hardware only Ethernet protocol, wherein the transport layer hardware only Ethernet protocol is lossy, and wherein the one or more processors include a hardware replay architecture configured to replay packets transmitted under the transport layer hardware only Ethernet protocol.

In some aspects, the techniques described herein relate to a first node, wherein the hardware replay architecture includes: a local storage configured to store the packets transmitted under the transport layer hardware only Ethernet protocol.

In some aspects, the techniques described herein relate to a first node, wherein the hardware replay architecture includes: a linked-list stored in the local storage and configured to track an order of the packets for transmitting to another node, wherein each element of the linked-list corresponds to each of the packets stored in the local storage.

In some aspects, the techniques described herein relate to a first node, wherein the hardware replay architecture is configured to transmit packets in an order corresponding to the linked-list.

In some aspects, the techniques described herein relate to a first node, wherein the hardware replay architecture is configured to store: a first pointer configured to point to a first element of the linked-list, wherein the first pointer indicates not to replay a first packet of the packets corresponding to the first element of the linked-list; and a second pointer configured to point to a second element of the linked-list, wherein the second pointer indicates to replay a second packet of the packets corresponding to the second element of the linked-list.

In some aspects, the techniques described herein relate to a first node, wherein the hardware replay architecture replays the second packet and one or more packets following the second packet according to the order of the packets for transmitting.

In some aspects, the techniques described herein relate to a first node, wherein the hardware replay architecture causes the local storage to discard the first packet and one or more packets preceding the second packet according to the order of the packets for transmitting.

In some aspects, the techniques described herein relate to a computer-implemented method implemented at a first node for replaying packets that are transmitted over a first link to a second node using an Ethernet protocol, the computer-implemented method including: storing a linked-list including the packets, wherein the linked-list maintains an order of the packets for transmitting to the second node; determining to replay a first packet of the packets in response to at least one of (a) a receipt of a non-acknowledgement of the first packet from the second node or (b) a timeout associated with the first packet; and retiring a second packet of the packets in response to a receipt of an acknowledgement of the second packet from the second node, wherein the Ethernet protocol is lossy.

In some aspects, the techniques described herein relate to a computer-implemented method, wherein the first node includes a hardware replay architecture including a plurality of pipelined stages, and wherein the hardware replay architecture determines to process data associated with the first link rather than a second link at a first pipelined stage of the plurality of pipelined stages.

In some aspects, the techniques described herein relate to a computer-implemented method, wherein the hardware replay architecture determines to replay the first packet at a second pipelined stage of the plurality of pipelined stages.

In some aspects, the techniques described herein relate to a computer-implemented method, wherein the hardware replay architecture determines to replay a third packet of the packets and the first packet of the packets based on the order of the packets maintained by the linked-list at the second pipelined stage of the plurality of pipelined stages.

In some aspects, the techniques described herein relate to a computer-implemented method, wherein the first node and the second node are in an Ethernet based network, and wherein the first node communicates with the second node through an Ethernet switch.

In some aspects, the techniques described herein relate to a computer-implemented method, wherein the first node includes a network interface processor (NIP) and a high-bandwidth memory (HBM), and wherein a bandwidth of the HBM is at least one gigabytes.

In some aspects, the techniques described herein relate to a first node for transmitting packets in an Ethernet based network, the first node including: one or more processors including: a first-in-first-out (FIFO) memory configured to store timing and status information associated with a plurality of links, wherein the first node is configured to transmit packets over the plurality of links to one or more other nodes using an Ethernet protocol; a timer configured to tick according to a time period, wherein the timer is associated with the plurality of links; and a logic circuitry configured to: access entries of the FIFO memory based on respective ticks on the timer; and determine, based on the timing and status information associated with a first link of the plurality of links, to replay at least one packet associated with the first link, wherein the Ethernet protocol is lossy.

In some aspects, the techniques described herein relate to a first node, wherein the logic circuitry is configured to access the entries of the FIFO memory in a round-robin manner.

In some aspects, the techniques described herein relate to a first node, wherein the timer is configured to adjust the time period based on a number of active links that are associated with the entries of the FIFO memory, wherein the active links are included in the plurality of links.

In some aspects, the techniques described herein relate to a first node, wherein the logic circuitry is configured to determine, based on the timing and status information associated with a second link of the plurality of links, to retire packets associated with the second link.

In some aspects, the techniques described herein relate to a first node, wherein the packets associated with the second link are stored in a local storage of the first node, and wherein the logic circuitry causes the local storage to discard the packets associated with the second link responsive to determining to retire the packets associated with the second link.

In some aspects, the techniques described herein relate to a first node, wherein the logic circuitry is configured to determine, based on the timing and status information associated with a second link of the plurality of links, to close the second link.

In some aspects, the techniques described herein relate to a first node, wherein the timing and status information associated with the first link of the plurality of links indicates that an acknowledgement of receiving the at least one packet associated with the first link has not been received by the first node over a threshold duration for replaying packets.

In some aspects, the techniques described herein relate to a first node for Ethernet based communication, the first node including: one or more processors configured to implement a transport layer hardware only Ethernet protocol, wherein the transport layer hardware only Ethernet protocol is lossy, and wherein the one or more processors include a hardware link timer configured to determine packets transmitted under the transport layer hardware only Ethernet protocol to replay.

In some aspects, the techniques described herein relate to a first node, wherein the first node transmits a first plurality of packets over a first link and a second plurality of packets over a second link according to the transport layer hardware only Ethernet protocol, and wherein the hardware link timer includes: a first-in-first-out (FIFO) memory configured to store timing and status information associated with the first link in a first entry of the FIFO memory, and timing and status information associated with the second link in a second entry of the FIFO memory.

In some aspects, the techniques described herein relate to a first node, wherein the hardware link timer includes a timer associated with multiple links that ticks according to a time period, wherein the hardware link timer accesses entries of the FIFO memory in a round-robin manner ticks of the timer, wherein the entries include the first entry and the second entry.

In some aspects, the techniques described herein relate to a first node, wherein the hardware link timer is configured to adjust the time period based on a number of active links that are associated with entries of the FIFO memory, and wherein the active links include the first link and the second link.

In some aspects, the techniques described herein relate to a first node, wherein the hardware link timer is configured to: determine, based on the timing and status information associated with the first link stored in the first entry of the FIFO memory, to replay at least some of the first plurality of packets; and determine, based on the timing and status information associated with the second link stored in the second entry of the FIFO memory, to retire the second plurality of packets.

In some aspects, the techniques described herein relate to a first node, wherein the second plurality of packets are stored in a local storage of the first node, and wherein the hardware link timer causes the local storage to discard the second plurality of packets responsive to determining to retire the second plurality of packets.

In some aspects, the techniques described herein relate to a first node, wherein the timing and status information associated with the first link indicates that an acknowledgement of receiving one of the first plurality of packets has not been received by the first node over a threshold duration for replaying packets.

In some aspects, the techniques described herein relate to a computer-implemented method implemented at a first node in an Ethernet based network, the computer-implemented method including: storing timing and status information associated with a plurality of links in a first-in-first-out (FIFO) memory of the first node, wherein the first node is configured to transmit packets over the plurality of links to one or more other nodes using an Ethernet protocol; accessing entries of the FIFO memory based on respective ticks of a hardware timer; and determining, based on the timing and status information associated with a first link of the plurality of links, to replay at least one packet associated with the first link, wherein the Ethernet protocol is lossy.

In some aspects, the techniques described herein relate to a computer-implemented method, wherein the entries of the FIFO memory are accessed in a round-robin manner.

In some aspects, the techniques described herein relate to a computer-implemented method, further including: adjusting a time period of the hardware timer based on a number of active links that are associated with the entries of the FIFO memory, wherein the active links are included in the plurality of links.

In some aspects, the techniques described herein relate to a computer-implemented method, further including: determining, based on the timing and status information associated with a second link of the plurality of links, to retire packets associated with the second link.

In some aspects, the techniques described herein relate to a computer-implemented method, further including causing the at least one packet associated with the first link to be replayed.

In some aspects, the techniques described herein relate to a computer-implemented method, wherein the timing and status information associated with the first link of the plurality of links indicates that an acknowledgement of receiving the at least one packet associated with the first link has not been received by the first node over a threshold duration for replaying packets.

In some aspects, the techniques described herein relate to all embodiments described and discussed above.

### BRIEF DESCRIPTION OF THE DRAWINGS

Throughout the drawings, reference numbers are re-used to indicate correspondence between referenced elements. The drawings are provided to illustrate examples of the subject matter described herein and not to limit the scope thereof.

Embodiments of the present disclosure are described with reference to the accompanying drawings, in which like reference characters reference like elements, and wherein:
FIGS. 1A-1B are tables showing example protocols operating on different layers of the Open System Interconnection (OSI) Model.
FIG. 2 depicts an example state machine for opening and closing links between nodes that implement Tesla Transport Protocol (TTP) in accordance with embodiments of the present disclosure.
FIGS. 3A-3B are example timing diagrams depicting the transmission and reception of packets between two devices that implement TTP in accordance with embodiments of the present disclosure.
FIG. 4 illustrates an example schematic block diagram of a node that implements TTP in accordance with embodiments of the present disclosure.
FIG. 5 depicts an example header for packets transmitted or received pursuant to the TTP in accordance with embodiments of the present disclosure.
FIG. 6 illustrates an example network and computing environment in which embodiments of the present disclosure can be implemented.
FIGS. 7A-7B show opcodes of different types of TTP packets in accordance with some embodiments of the present disclosure.
FIG. 8 illustrates an example physical storage for storing packets for replaying packets transmitted and/or received under a lossy protocol, such as TTP, in accordance with some embodiments of the present disclosure.
FIG. 9 depicts an example data structure (e.g., a linked list) for tracking and maintaining the order of transmission for transmitting and replaying packets according to some embodiments of the present disclosure.
FIG. 10 illustrates an example block diagram of at least a portion of a hardware replay architecture for replaying packets transmitted over multiple links in accordance with some embodiments of the present disclosure.
FIG. 11 illustrates an example block diagram of a hardware link timer that implements timeout checks mechanisms for replaying packets without the assistance of software in accordance with some embodiments of the present disclosure.
FIG. 12 illustrates an illustrative routine for replaying packets that are transmitted from a node in accordance with some embodiments of the present disclosure.
FIG. 13 depicts an example routine for determining whether to replay one or more links associated with a node.

### DETAILED DESCRIPTION OF CERTAIN EMBODIMENTS

The following detailed description of certain embodiments presents various descriptions of specific embodiments. However, the innovations described herein can be embodied in a multitude of different ways, for example, as defined and covered by the claims. In this description, reference is made to the drawings where like reference numerals and/or terms can indicate identical or functionally similar elements. It will be understood that elements illustrated in the figures are not necessarily drawn to scale. Moreover, it will be understood that certain embodiments can include more elements than illustrated in a drawing and/or a subset of the elements illustrated in a drawing. Further, some embodiments can incorporate any suitable combination of features from two or more drawings. The headings are provided for convenience only and do not impact the scope or meaning of the claims.

Generally described, one or more aspects of the present disclosure correspond to systems and methods that use hardware mechanisms (e.g., without the assistance of software) to control network traffic flow. More specifically, some embodiments of the present disclosure disclose a flow control protocol compatible with Ethernet standards and implementable through hardware circuitry to achieve low latency, such as latency within a single digit microsecond. In some embodiments, the single digit microsecond latency is achieved at least in part through utilizing a hardware-controlled state machine to streamline the opening and closing of communication links between nodes of networks. Additionally, the disclosed flow control protocol (e.g., Tesla Transport Protocol (TTP)) may limit a number of packets transmitted/retransmitted over an established link and/or a duration of waiting periods before transitioning to a next state of the hardware-controlled state machine. This can contribute to achieving low latency of communication. Advantageously, the flow control protocol disclosed herein enables pure hardware implementation of up to layer four (transport layer) of the Open System Interconnection (OSI) Model.

Some aspects of this disclosure relate to a flow control designed to run on hardware only. Such flow control can be implemented without software flow controls or central processing unit (CPU)/kernel involvement. This can allow for an IEEE 802.3 Ethernet capability with latency limited only or primality by physics. For example, a single digit microsecond latency can be achieved.

Tesla Transmit Protocol over Ethernet (TTP) is hardware only Ethernet flow control protocol that can implement up to the transfer layer in the OSI model. Layer 2 (L2) Ethernet flow control can be implemented in hardware only. Layer 3 and/or layer 4 Ethernet flow control can also be implemented in hardware only. Link control, timers, congestion, and replay functionality can be implemented in hardware. The TTP can be implemented in network interface processors and network interface cards. TTP can enable a full I/O batching configuration. The TTP is a lossy protocol. In a lossy protocol, data that gets lost can be recovered. For example, in a lossy protocol any lost or corrupted packets can be replayed (e.g., re-transmitted) and recovered until reception is acknowledged.

The L2 header, state machine, and opcodes in this disclosure can define this hardware only protocol (e.g., TTP) that can recover from lost packets in an N-to-N set of links.

Additionally, some embodiments of the present disclosure disclose a hardware replay architecture (e.g., a micro-architecture) that is capable of replaying packets transmitted and/or received under a lossy protocol, such as the TTP. As noted above, the TTP (or TTPoE) is a hardware only Ethernet flow control protocol. The TTP can facilitate implementation of extreme low latency (e.g., single digit microsecond(s)) fabrics for HPC and/or AI training systems. To implement a lossy Ethernet flow control protocol without assistance of software-controlled mechanisms, some aspects of this disclosure describe a hardware replay architecture that can buffer, hold, acknowledge and/or replay packets such that any lost or corrupted packets can be replayed and recovered until reception is acknowledged.

To replay packets transmitted and/or received pursuant to a lossy Ethernet protocol such as TTP with hardware only resources, some embodiments of the disclosed hardware replay architecture utilize physical storage and data structure to store packets transmitted and/or received in different links and maintain the order of packets transmitted, in particular when replay occurs. In some embodiments, the physical storage may be any type of local storage or cache (e.g., low-level caches) that store, buffer, or hold packets associated with one or more links. The physical storage may be limited in size, such as having a size in the order of megabytes (MB) or kilobytes (KB). In some embodiments, the data structure may include one or more linked lists, where each linked list may record and/or track the order of packets transmitted for a link established between a first communication node and a second communication node. Advantageously, implementing a replay mechanism for lossy protocol using the hardware replay architecture that employs physical storage limited in size and linked-lists that keep track of packet order for various links allows a communication node to operate in compliance with TTP under limited hardware resources (e.g., when virtual processing or storage resources are not available).

Further, some embodiments of the present disclosure relate to a hardware link timer that implements timeout checks without the assistance of software-controlled mechanisms. Rather than employing multiple timers to track timeouts on a per-link basis, some aspects of this disclosure describe a hardware link timer that employs a single timer that is capable of tracking timeouts over multiple links through coordination with a first-in-first-out (FIFO) memory. More specifically, an entry of the FIFO memory may store the status and/or timer information of a link and the hardware link timer may access entries of the FIFO memory in a round-robin manner to determine whether packets associated with a link can be discarded or need to be preserved. If the hardware link timer determines that packets associated with the link can be discarded, more space can be available for storing packets associated with another link under constrained hardware resources. If the hardware link timer determines that one or more packets associated with the link should be preserved, the preserved packet(s) associated with the link may enable a communication node hosting the hardware link timer to replay the preserved packet(s).

Ethernet is an established standard technology for wired communication. In recent years, Ethernet has also found use in the automotive industry for various vehicular applications. Typically, the latency associated with Ethernet communication ranges from hundreds of microseconds to more than several milliseconds. Besides limits of physics (e.g., signal travel speed over communication medium), the complexity of associated protocols for controlling data flow over Ethernet has typically presented another bottleneck in latency. For example, to follow the Transport Control Protocol (TCP) or the User Datagram Protocol (UDP), software-controlled management may be generally desired. The software-controlled or software-assisted network flow control management tends to increase latency associated with communication.

Such limitations on latency, however, may make Ethernet technology less suitable for applications such as high-performance computing (HPC) and artificial intelligence (AI) training data centers, where latency within single microsecond may be desirable to improve system performance and efficiency. Although protocols such as Remote Direct Memory Access (RDMA) over Converged Ethernet (RoCE) or InfiniBand over Ethernet (IBoE) may help reduce latency, they may entail greater system design complexity or cost. For example, RoCE or InfiniBand have lossless network and scaling specifications that may be challenging to implement. Implementing RoCE or InfiniBand may also result in significant software control overhead or involve bandwidth-limited centralized token control mechanisms. Additionally, a system that implements RoCE or InfiniBand may be pause-heavy (e.g., frequently paused).

To address at least a portion of the above problems, some embodiments of the present disclosure disclose a flow control protocol (e.g., Tesla Transport Protocol (TTP)) operable over Ethernet based networks or peer-to-peer (P2P) networks. The flow control protocol may be fully implementable through hardware without the assistance of software-controlled mechanisms so as to bring latency of communication to within a single digit microsecond. The flow control protocol may be implemented without the involvement of software resources such as general purpose processors or central processing unit executing computer-readable instructions or operating systems. Additionally, with some mechanisms (e.g., one or more of limiting number of packets that can be transmitted before pausing, limiting number of links that can be established simultaneously, hardware-controlled state machine, or proposed header format for packets transmitted or received pursuant to TTP) built into the flow control protocol, virtualized resources (e.g., virtualized processors or memory) are not needed to implement the flow control protocol.

In some embodiments, a state machine expedites transitions among different states for opening and closing a communication link between nodes. The state machine may be maintained and implemented by hardware without the involvement of software, firmware, driver or other types of programmable instructions. As such, the transition among different states of the state machine may be accelerated compared with implementations of other protocols leveraging software support such as transmission control protocol (TCP) applicable to Ethernet based networks.

In some embodiments, a header (e.g., TTP header) for packets transmitted and received pursuant to the TTP supports operations from layer 2 through layer 4 of the Open System Interconnection (OSI) Model. The header may include fields recognizable by existing Ethernet based network devices or infrastructure. As such, compatibility of TTP with existing Ethernet standards may be preserved. Advantageously, this can allow economic use of existing infrastructure and/or supply chains, bring more system design options, and achieve system-level reuse or redundancy.

As noted above, a node may implement or operate under the TTP (e.g., communicating with another node using TTP) using hardware only resources without assistance of software-controlled mechanisms. To operate under the TPP with pure hardware resource, the node may employ a hardware replay architecture to replay packets that may be lost in transmission. In some embodiments, the hardware replay architecture may include local storage such as one or more caches for storing packets that are transmitted and/or received on one or more links, where each of the one or more links may be opened or closed pursuant to TTP. In contrast to protocols such as TCP or UDP where virtualized resources having almost unlimited processing power and storage capacity are typically available through software-controlled network flow control management, the size of a cache (e.g., a low-level cache) employed by the hardware replay architecture within the node that operates under the TTP may be limited in size. For example, the size of the cache may be in the order of megabytes (MB) or kilobytes (KB), such as 256 KB. To communicate with each other through one or more links established pursuant to a lossy communication protocol such as TTP under limited local storage, packets associated with the one or more links should be adequately managed (e.g., preserved or discarded) such that some packets are preserved for replaying while others are discarded to avoid overflow of cache.

In some examples, a first node transmitting N packets to a second node using a link established under TTP may utilize a cache to store the N packets, N being any positive integer that may be limited by the size of the cache. The first node may continually transmit some or all of the N packets to the second node so long as constraints from the TTP and/or network conditions permit. To accommodate the replaying packets, the cache may continue to store a packet already transmitted until acknowledgement of receiving the packet is received from the second node. When acknowledgement of receiving the packet is received, the cache may discard the packet to make out space for storing packets to be transmitted over the link or other links between the first node and the second node or other nodes. In contrast, if a non-acknowledgement of the packet is received (e.g., the second node notifying the first node that the packet is not received) or a timeout occurs without receiving an acknowledgement or non-acknowledgement of receiving the packet from the second node, the first node may replay the packet (e.g., retransmit the packet to the second node). In association with replaying the packet, the first node may discard other packets with which acknowledgement of reception has been received.

In some examples, the order of transmitting and replaying packets may be the same. For example, the first node may transmit the N packets in a particular order (e.g., 1^{st} packet, 2^{nd} packet to the N^{th} packet). If the 5^{th} packet is replayed (e.g., in response to the first node receiving non-acknowledgement of the 5^{th} packet from the second node, in response to a timeout occurring without receiving an acknowledgement or acknowledgement of receiving the 5^{th} packet) and the acknowledgement regarding the 1^{st} through the 4^{th} packets has been received, the cache may discard the 1^{st} through the 4^{th} packets but not the 5th packet such that the node may replay the 5^{th} packet. Additionally and/or optionally, when replaying the 5^{th} packet, the first node may replay packets that were transmitted after the 5^{th} packet (assuming N > 5) in the same order as previously transmitted.

In some examples, the hardware replay architecture of the first node may utilize a linked-list in coordination with the cache to maintain the order between first transmission of some or all of the N packets and any replay afterwards. The linked-list may include N elements, where each element includes each of the N packets and a reference to the next element that corresponds to the next packet. When transmitting and/or replaying the N packets, the hardware replay architecture may further utilize one or more pointers that point to one or more elements in the linked-list to determine if a packet is to be kept for replaying or can be discarded (e.g., to conserve storage resources). Take N being 9 (e.g., 9 packets transmitted from the first node to the second node) as an example, in the linked-list, a 1^{st} element may include a 1^{st} packet and a 1^{st} reference, where the 1^{st} reference points to a 2^{nd} element; the 2^{nd} element may include a 2^{nd} packet and a 2^{nd} reference, where the 2^{nd} reference points to a 3^{rd} element; and the 8^{th} element may include the 8^{th} packet and a 8^{th} reference, where the 8^{th} reference points to a 9^{th} element; and the 9^{th} element may include the 9^{th} packet. The hardware replay architecture may maintain and update three pointers that point to three elements. Assuming the node has transmitted the 1^{st} through 9^{th} packets and has received acknowledgement from the second node of receiving the 1^{st} through 7^{th} packets but not the 8^{th} and 9^{th} packets, a first pointer may point to the 1^{st} element of the linked-list, a second pointer may point to the 8^{th} element of the linked-list, and a third pointer may point to the 9^{th} element of the linked-list. As such, the hardware replay architecture may cause the cache to discard packets and replay packets based on the three pointers. More specifically, the cache may replay the packet pointed by the second pointer (e.g., the 8^{th} packet) through the packet pointed by the third pointer (e.g., the 9^{th} packet) and discard remaining packets (e.g., the packet pointed by the first pointer before the packet pointed by the second pointer). Additionally and optionally, some or all the hardware replay architecture may operate in a pipelined manner to increase throughput of the node. Advantageously, using the cache and linked-lists to implement replay functionality enables the first node to communicate with the second node using TTP under limited hardware resources without the assistance of software controlled mechanisms.

As noted above, a node operating under the TTP protocol may include a hardware link timer to implement timeout checks mechanisms for replaying packets without assistance of software. In contrast to other Ethernet protocols (e.g., TCP or UDP) with which software are typically employed to track timeouts over multiple links using multiple timers (e.g., a timer for one link), the hardware link timer may allow the node to determine which packet(s) transmitted over which link(s) to replay and, if replay is desired, when to replay under limited hardware resources (e.g., when large resource pools of virtual and/or physical address space and computing resources are not available). In some embodiments, the hardware link timer may periodically perform timing check on established links (e.g., active links) associated with a node. The hardware link timer may include a first-in-first-out (FIFO) memory that can store timing and status information associated with each of the active links and check timing and status associated with each of the active links in a round-robin manner. The hardware link timer may utilize a single programmable timer to schedule points in time for multiple active links and/or packets to read out timing and status information associated with each of the multiple active links and/or packets. The read out timing and status information may be used for determining whether to replay packets associated with a link or to discard the packets through further information look up.

In some examples, a FIFO memory can store timing information associated with one or more links established between a first node and other node(s). For example, the first node may include the hardware link timer that uses a FIFO memory to store timing information associated with M links established between the first node and one or more other nodes, with M being a positive integer greater than one. Instead of using M timers where each timer tracks timing information of a corresponding link, the hardware link timer may utilize a single timer (e.g., a timer that ticks once for a programmable time period) for tracking and/or updating timing information for each of the M links through accessing the FIFO memory in a round-robin (e.g., circular) manner. Specifically, the hardware link timer may access entries of the FIFO memory one at a time when the single timer ticks once, where each accessed entries of the FIFO memory corresponds to one of the M links. In some embodiments, the time period of each tick may vary and may be in the order between hundreds of microseconds to a single digit microsecond. For example, the time period of a tick may be up to 100 microseconds and may be down to 1 microsecond. Additionally, the hardware link timer may adjust the time period of a tick based on number of links (e.g., M) represented by entries of the FIFO memory. For example, when M increases (e.g., more links represented by entries of the FIFO memory), the time period of a tick may decrease; and when M decreases (e.g., fewer links represented by entries of the FIFO memory), the time period of a tick may increase. As such, a time interval within which a status and/or timing information of a link is checked may remain unchanged if the time period of a tick changes disproportionally to the number of links represented by entries of the FIFO memory.

In some examples, timing and/or status information associated with one of the M links may indicate how long the link has not received acknowledgement of receiving packets that were transmitted. Assuming a first node has transmitted N packets over the link to a second node, one entry of the FIFO memory may store timing and/or status information that, when accessed through the round-robin manner under a particular time period of a tick, indicates acknowledgement of receiving any of the N packets has not been received for over a predetermined duration. Upon accessing the entry of the FIFO memory, the hardware link timer may utilize timing and/or status information stored in the entry to look up the N packets that may be stored in a local storage (e.g., a low-level cache) of the first node for replaying the N packets. Alternatively, timing and/or status information associated with one of the M links may be stored in one entry of the FIFO memory to indicate the link can be closed (e.g., all packets transmitted by the first node have been received by the second node). Upon accessing the entry of the FIFO memory, the hardware link timer may utilize timing and/or status information stored in the entry to look up packets that may still be stored in the local storage of the first node, and discard the packets because the timing and/or status information stored in the entry of the FIFO memory indicates that the link can be closed. Advantageously, by utilizing a single timer for multiple links and/or packets that ticks under adjustable periods and a FIFO memory that stores timing and/or status information of the multiple links, the first node may replay packets at proper timing to achieve low latency and release hardware resources occupied by inactive links (e.g., closed links) for use by active links to operate under limited computing and storage resources.

Although the various aspects will be described in accordance with illustrative embodiments and combination of features, one skilled in the relevant art will appreciate that the examples and combination of features are illustrative in nature and should not be construed as limiting. More specifically, aspects of the present application may be applicable with various types of networks and communication protocols under different contexts. Still further, although specific architectures of circuitry block diagrams or state machine for controlling network flows will be described, such illustrative circuitry block diagrams or state machine or architecture should not be construed as limiting. Accordingly, one skilled in the relevant field of technology will appreciate that the aspects of the present application are not necessarily limited to application to any particular types of networks, network infrastructure or illustrative interactions between nodes of networks.

### Tesla Transport Protocol (TTP)

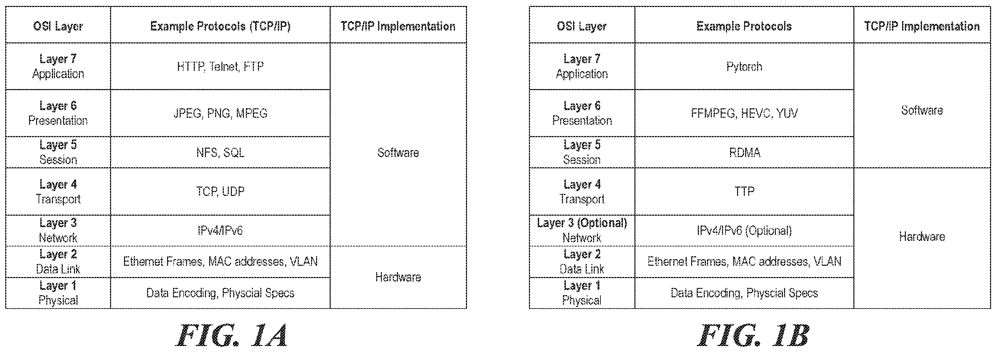

FIGS. 1A-1B are tables that show the OSI Model (with seven layers) along with example protocols associated with each layer. FIG. 1A shows example protocols with TCP and UDP protocols operating on the layer 4 (e.g., transport layer) of the OSI Model. FIG. 1B shows example protocols with the Tesla Transport Protocol (TTP) operating on the layer 4 of the OSI Model.

As shown in FIG. 1A, besides the TCP or UDP operating on the layer 4, other example protocols or applications operating along with the TCP or UDP may include: Hypertext Transfer Protocol (HTTP), Teletype Network (Telnet), File Transfer Protocol (FTP) operating on the layer 7; Joint Photographic Experts Group (JPEG), Portable Network Graphics (PNG), Moving Picture Experts Groups (MPEG) operating on the layer 6; Network File System (NFS) and Structured Query Language (SQL) operating on the layer 5; Internet Protocol version 4 (IPv4) / Internet Protocol version 6 (IPv6) operating on the layer 3; and so on. With TCP or UDP operating on the layer 4, implementation of layer 4 typically involves software as shown in FIG. 1A.

As shown in FIG. 1B, besides the TTP operating on the layer 4, other example protocols or applications operating along with the TTP may include: Pytorch operating on the layer 7; FFMPEG, High Efficiency Video Coding (HEVC), YUV operating on the layer 6; RDMA operating on the layer 5; IPv4/IPv6 operating on the layer 3; and so on. In contrast to FIG. 1A, with TTP operating on the layer 4, implementations of layers 1 through 4 of the OSI Model can be carried out in hardware only without involvement of software as shown in FIG. 1B. Advantageously, pure hardware implementation through layers 1 to 4 of the OSI Model based on TTP as shown in FIG. 1B can shorten the latency of communication over Ethernet based networks compared with the implementation as shown in FIG. 1A.

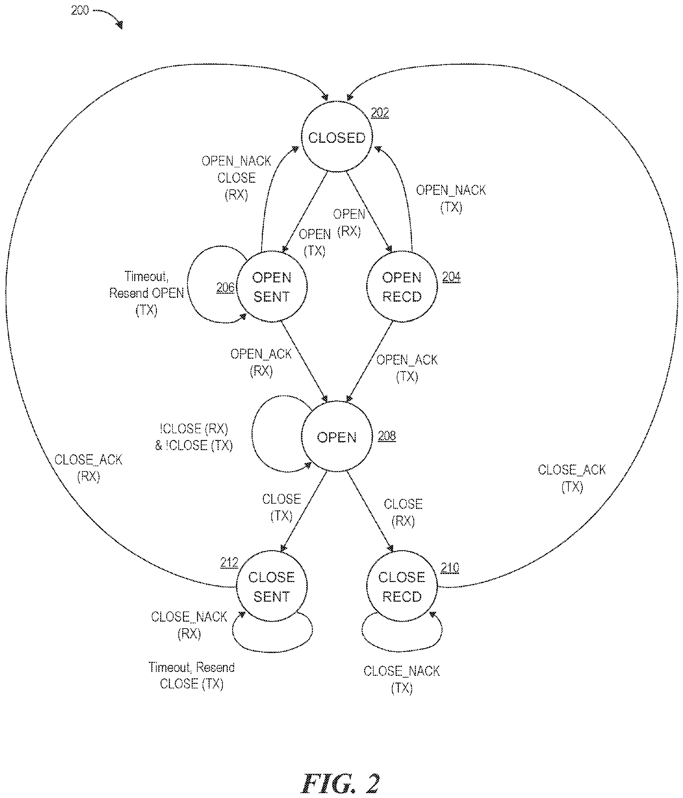

FIG. 2 depicts an example state machine 200 for opening and closing links between nodes that implement the TTP in accordance with embodiments of the present disclosure. The state machine 200 can be implemented by a network interface processor or a network interface card. There can be one state machine 200 for each Ethernet link between nodes on each node communicating over an Ethernet link. For example, if a network interface processor can communicate with 5 network interface cards over 5 TTP links, then the network interface processor can include 5 instances of the state machine 200 with one instance for each link. In this example, each of the 5 network interface cards can have one instance of the state machine 200 for communicating with the network interface processor. In some embodiments, nodes communicating with each other using the state machine 200 may form a peer-to-peer network.

As shown in FIG. 2, the state machine 200 includes a closed state 202, an open received state 204, an open sent state 206, an open state 208, a close received state 210 and a close sent state 212. The state machine 200 may begin at the closed state 202, which may indicate no communication link is currently open between a first node that maintains the state machine 200 and a second node with which communication link is to be established. Further, an individual copy of the state machine 200 may be maintained, updated and transitioned by a node operating based on the Tesla Transport Protocol (TTP) disclosed in the present disclosure. Additionally, if a node operating based on the TTP communicates concurrently or overlapping in time with multiple nodes, the node may retain multiple and independent state machines 200 for each links.

The state machine 200 may then transition differently depending on whether the first node transmits to the second node or receives from the second node a request for establishing communication link. If the first node transmits a request to open a communication link to the second node, the state machine 200 may transition from the closed state 202 to the open sent state 206. On the other hand, if the first node receives a request to open a communication link from the second node, the state machine 200 may transition from the closed state 202 to the open received state 204.

While at the open sent state 206, the state machine 200 may stay at the open sent state 206 or transition either back to the closed state 202 or forward to the open state 208 depending on various criterion. If the first node receives an open-nack (e.g., a message that declines a request to open a link) from the second node, the state machine 200 may transition from the open sent state 206 back to the closed state 202. If, on the other hand, the first node receives an open-ack (a message that accepts a request to open a link) from the second node, the state machine 200 may transition from the open sent state 206 to the open state 208. Alternatively, if the first node does not receive an open-nack or an open-ack from the second node within a certain period of time, the first node may time-out, then the first node can retransmit a request to open a communication link to the second node and stay at the open sent state 206.

As mentioned above, while at the closed state 202, if the first node receives a request to open a communication link from the second node, the state machine 200 may transition from the closed state 202 to the open received state 204. At the open received state 204, the state machine 200 may transition differently depending on whether the first node accepts or declines a request to open a link from the second node. For example, the first node may choose to transmit an open-nack (e.g., decline a request to open a link) to the second node. In such situation, the state machine 200 may transition back to the closed state 202, where the first node may further transmit or receive a request to open a link from the second node or other nodes. Alternatively, at the open received state 204, the first node may transmit an open-ack to the second node and then transition to the open state 208.

While at the open state 208, the first node and the second node may transmit and receive packets from each other through the communication link established. This link can be a wired Ethernet link. The first node may stay at the open state 208 until some condition occurs. In some embodiments, the state machine 200 may transition from the open state 208 to the close received state 210 responsive to receiving a request to close the communication link that allows the first node and the second node to transmit and receive packets while at the open state 208. Alternatively, the state machine 200 may transition from the open state 208 to the close sent state 212 responsive to the first node transmitting a request to close the communication link to the second node. Besides requests to close the communication link, the state machine 200 can transition from the open state 208 to the close received state 210 or the close sent state 212, if the communication link has been idle for more than a threshold amount of time.

While at the close received state 210, the state machine 200 may transition back to the closed state 202 if the first node transmits a close-ack (e.g., a message that acknowledges or accepts a request to close the link) to the second node. Otherwise, the state machine 200 may stay at the close received state 210 if the first node transmits a close-nack (e.g., a message that refuses or does not acknowledge a request to close the link) to the second node.

While at the close sent state 212, the state machine 200 may transition back to the closed state 202 if the first node receives a close-ack (e.g., a message that acknowledges or accepts a request to close the link) from the second node. Otherwise, the state machine 200 may stay at the close sent state 212 if the first node receives a close-nack (e.g., a message that refuses or does not acknowledge a request to close the link) transmitted from the second node. In the close sent state 212, the first node can resend a request to close the communication link to the second node if the first node does not hear back from the second node within a timeout threshold.

In some embodiments, the state machine 200 may be maintained and implemented by hardware without the involvement of software, firmware, driver or other types of programmable instructions. As such, the transition among different states of the state machine 200 may be accelerated compared with implementations of other protocols that involve software support such as transmission control protocol (TCP) applicable to Ethernet based networks.

In some embodiments, instead of keeping transmitting packets waiting to be transmitted and stored in a transmission queue, the first node may immediately stop transmitting packets in the transmission queue and while at the close received state 210 sends a close-ack to the second node responsive to receiving a request to close the link from the second node. Advantageously, refraining from continuing to transmit packets for an indefinite amount of time after receiving a request to close a link enables the first node to transition from the open state 208 back to the closed state 202 with less transition period and less uncertainty in time.

Additionally, a number of packets that may be continually transmitted by the first node or second node during the open state 208 may be limited. For example, while at the open state 208, the first node may only transmit N packets consecutively before stopping transmitting packets, where N may be a positive integer from 1 to over a thousand. The number N can be bounded by physical memory. In some embodiments, N may be limited or constrained by the size of physical memory (e.g., dynamic random access memory or the like) available to the first node. Specifically, N may be proportional to the size of the physical memory associated with the first node or the second node. For example, if 1 gigabyte (GB) physical memory is allocated to the first node, N may be up to one million. In some embodiments, N may be within tens of thousands or hundreds of thousands. During the open state 208, the amount of physical memory for exchanging packets can be tracked. Advantageously, limiting the number of packets that may be continually transmitted by the first node or the second node may reduce the computing and storage resources to implement the state machine 200. In contrast to protocols (e.g., TCP) that generally presume availability of unlimited software and hardware resources through virtualization (e.g., virtualized memory or processing resources), limiting the number of transmitted packets allows the TTP to operate under more constrained computational and storage resources.

In some embodiments, the first node or the second node does not further wait to close a link after receiving or transmitting a close-ack to the other. For example, while at the close sent state 212, the first node may immediately transition to the closed state 202 responsive to receiving the close-ack transmitted from the second node. Instead of waiting another predetermined or random period of time to monitor whether the second node has additional packets to be transmitted, the first node may transition from the close sent state 212 back to the closed state 202 in a shorter amount of time. Advantageously, this increases the precision and shortens the latency associated with transitioning among states of the state machine 200, thereby allowing the TTP to facilitate communication with latency lower than protocols such as TCP.

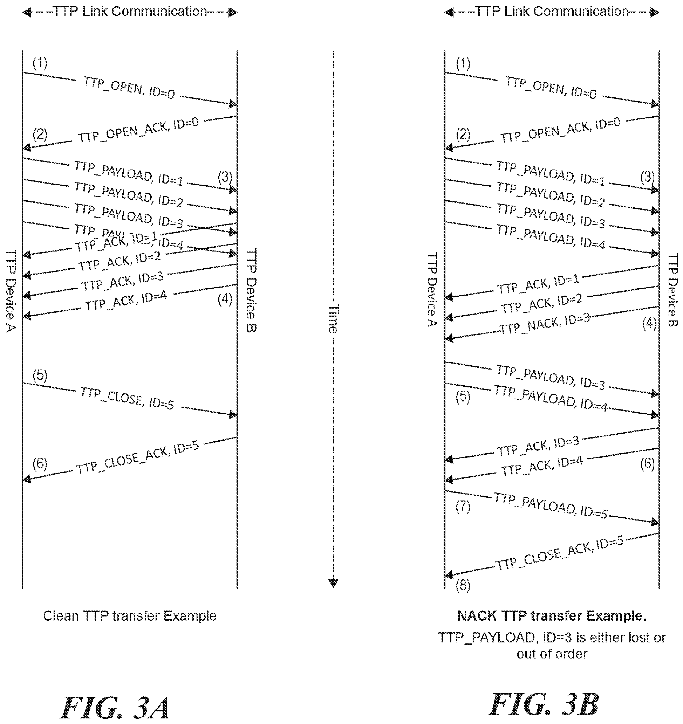

FIGS. 3A-3B illustrate example timing diagrams depicting transmission and reception of packets between two devices that implement the TTP in accordance with embodiments of the present disclosure. FIG. 3A illustrates a scenario where none of the transmitted packets from the device A to the device B are lost while FIG. 3B illustrates another scenario where some of the transmitted packets from the device A to the device B get lost. FIGS. 3A-3B may be understood in conjunction with the state machine 200. Device A and device B are two example nodes communicating over TTP.

As shown in FIG. 3A, the device A while at the closed state 202 may transmit a TTP_OPEN with packet ID = 0 to device B. After transmitting the TTP_OPEN to the device B at (1), the state machine maintained by device A may transition from the closed state 202 to the open sent state 206. Additionally, after receiving the TTP_OPEN from the device A at (1), the state machine maintained by device B may transition from the closed state 202 to the open received state 204.

Then, after receiving the TTP_OPEN_ACK from the device B at (2), the state machine maintained by device A may transition from the open sent state 206 to the open state 208. Additionally, after transmitting the TTP_OPEN_ACK to the device A at (2), the state machine maintained by device B may transition from the open received state 204 to the open state 208.

At (3), while at the open state 208, the device A may transmit four packets (e.g., TTP_PAYLOAD ID = 1 to 4) to the device B continually or consecutively before receiving any response from the device B. In some embodiments, the number of packets the device A may transmit to the device B before receiving any response from the device B is limited. Responsive to the packets received from the device A, at (4), the device B may transmit four packets (e.g., TTP_ACK ID = 1 to 4) acknowledging the reception of the four packets transmitted by the device A.

At (5), the device A transmits the TTP_CLOSE (with packet ID = 5) to the device B. After transmitting the TTP_CLOSE, the state machine maintained by the device A may transition from the open state 208 to the close sent state 212. Responsive to receiving the TTP_CLOSE from the device A, the state machine maintained by the device B may transition from the open state 208 to the close received state 210.

Thereafter, at (6), the device B may transmit the TIP_CLOSE_ACK (with packet ID = 5) to the device A. After transmitting the TTP_CLOSE_ACK to the device A, the state machine maintained by the device B may transition from the close received state 210 back to the closed state 202. After receiving the TTP_CLOSE_ACK from the device B, the state machine maintained by the device A may transition from the close sent state 212 back to the closed state 202. As such, the link/connection between the device A and the device B may be close.

FIG. 3B illustrates a "lossy" flow control feature associated with a flow control protocol (e.g., TTP) disclosed in the present disclosure, where lossy may indicate that lost or corrupted packets are retransmitted after reception of a non-acknowledgement.

As shown in FIG. 3B, the device A while at the closed state 202 may transmit a TTP_OPEN with packet ID = 0 to the device B. After transmitting the TTP_OPEN to the device B at (1), the state machine maintained by device A may transition from the closed state 202 to the open sent state 206. Additionally, after receiving the TTP_OPEN from the device A at (1), the state machine maintained by device B may transition from the closed state 202 to the open received state 204.

Then, after receiving the TTP_OPEN_ACK from the device B at (2), the state machine maintained by device A may transition from the open sent state 206 to the open state 208. Additionally, after transmitting the TTP_OPEN_ACK to the device A at (2), the state machine maintained by device B may transition from the open received state 204 to the open state 208.

At (3), while at the open state 208, the device A may transmit four packets (e.g., TTP_PAYLOAD ID = 1 to 4) to the device B continually or consecutively before receiving any response from the device B. However, due to some network conditions, the device B may not receive some of the packet (e.g., TTP_PAYLOAD ID = 3). As such, at (4), the device B may transmit three packets (e.g., TTP_ACK ID = 1 to 2, and TTP_NACK ID = 3) acknowledging the reception of the two packets (ID = 1 to 2) transmitted by the device A but notifying that the packet with TTP_PAYLOAD ID = 3 is not received.

After receiving the packet (e.g., TIP_NACK ID = 3) from the device B, at (5), the device A retransmits two packets (e.g., TTP_PAYLOAD ID = 3 to 4) to the device B. Notably, the retransmission of the two packets after receiving the packet (e.g., TTP_NACK ID = 3) reflect the "lossy" feature of the TTP. In some embodiments, the device A may retransmit some of the packets after the occurrence of time-out (e.g., when a local counter exceeds a particular value). Advantageously, the "lossy" feature enables the TTP to control or scale network flows without bounds due to the existence of the peer-to-peer linking between the device A and the device B and enables TTP to achieve link-specific recovery in a large system that is expected to lose some traffic.

At (6), after receiving the two packets (e.g., TTP_PAYLOAD ID = 3 to 4), the device B may transmit two packets (e.g., TTP_ACK ID = 3 to 4) to the device A to acknowledge the reception of the re-transmitted packets (e.g., TTP_PAYLOAD ID = 3 to 4).

At (7), the device A may transmit a packet (e.g., TTP_CLOSE ID = 5) to the device B in an attempt to close the link between the device A and device B. Additionally, at (7), the state machine maintained by the device A may transition from the open state 208 to the close sent state 212 and the state machine maintained by the device B may transition from the open state 208 to the close received state 210.

At (8), the device B may transmit a packet (e.g., TTP_CLOSE_ACK ID = 5) to the device A to acknowledge and agree to close the link. The state machine maintained by the device B may transition from the close received state 210 back to the closed state 202. Responsive to receiving the packet (e.g., TTP_CLOSE_ACK ID = 5) from the device B, the state machine maintained by the device A may transition from the close sent state 212 back to the closed state 202.

In some embodiments, the device A and/or the device B may not transition to the open state 208 or may not transmit or receive data packets until the process of negotiating a link is complete. For example, device A may not transmit data packets to or accept data packets from device B until device A receives the TTP_OPEN_ACK from device B. In these embodiments, there may be no need to impose a timeout period when closing a link between device A and device B, in particular when a TTP_OPEN is transmitted from device A or device B immediately after a previous link between device A and device B is closed.

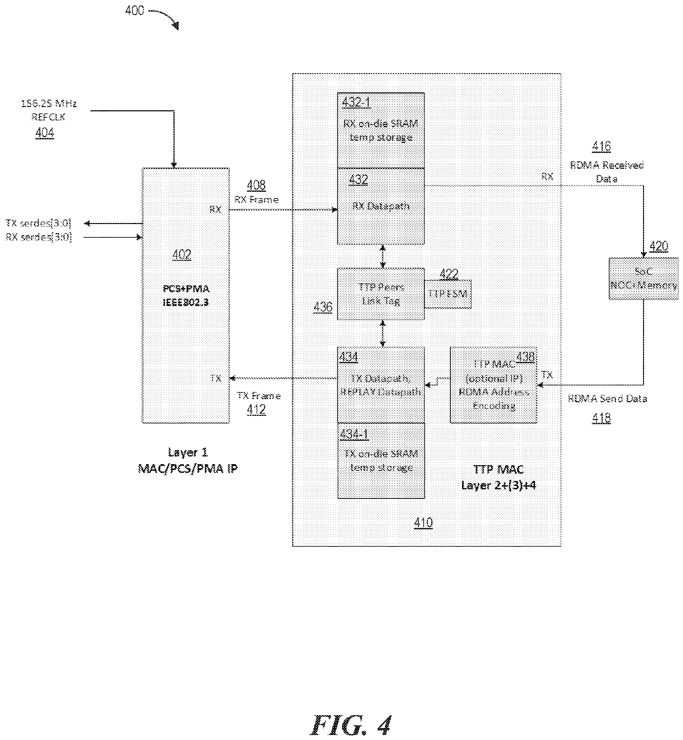

FIG. 4 illustrates an example block diagram of a node 400 that implements the TTP in accordance with embodiments of the present disclosure. As shown in FIG. 4, the node 400 may include a transmitting (TX) path and a receiving (RX) path. As shown in FIG. 4, at the front-end of the node 400 includes the Physical Coding Sublayer (PCS) + Physical Medium Attachment (PMA) block 402 that processes communications over layer 1 (e.g., physical layer) of the OSI Model. In some embodiments, the PCS + PMA block 402 operates based on a reference clock 404 that has a frequency of 156.25 MHz. In other embodiments, the PCS + PMA block 402 may operate under different clock frequencies. The PCS + PMA block 402 may be compatible with Ethernet or IEEE 802.3 standards. In an operation for processing data on the RX path, the PCS + PMA block 402 receives the RX serdes [3:0] as inputs and re-arranges RX serdes [3:0] into outputs (e.g., RX Frame 408) to be processed by the TTP Medium Access Control (MAC) block 410. In operation for processing data on the TX path, the PCS + PMA block 402 receives the TX Frame 412 from the TTP MAC block 410 as inputs and re-arranges the data formats to output the TX serdes [3:0].

On the RX path, TTP MAC block 410 receives the RX Frame 408 as inputs and outputs RDMA received data 416 to the System-on-chip (SoC) 420. On the TX path, TTP MAC block 410 receives RDMA send data 418 from the SoC 420 and outputs the TX Frame 412 to the PCS + PMA block 402. As shown in FIG. 4, the TTP MAC block 410 may handle the operations on layers 2 through 4 of the OSI Model. The TTP MAC block 410 may include the TTP finite state machine (FSM) 422. The TTP FSM 422 may maintain and update the state machine 200 as shown in FIG. 2. As discussed above, for each communication link the node 400 established with one or more other nodes, the TTP FSM 422 may maintain and update a corresponding state machine (e.g., the state machine 200) to control flow associated with respective communication link.

In some embodiments, the PCS + PMA block 402 and the TTP MAC block 410 may be implemented by hardware such as in the form of Application Specific Integrated Circuit (ASIC) or Field Programmable Gate Array (FPGA). As such, the PCS = PMA block 402 and the TTP MAC block 410 may operate without assistance or involvement of software/firmware/driver. Advantageously, the PCS + PMA block 402 and the TTP MAC block 410 may handle communications from layer 1 through layer 4 of the OSI Model without software assistance to reduce latency associated with communication in layer 1 through 4.

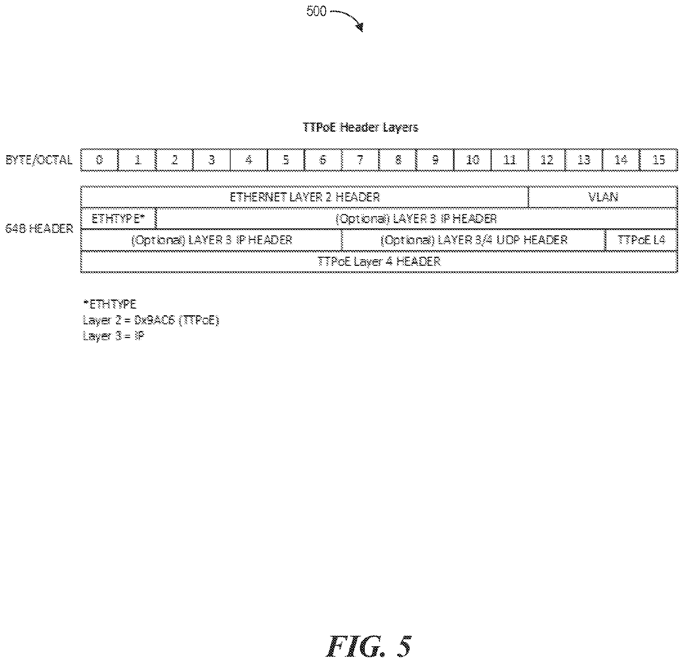

FIG. 5 depicts an example header 500 for packets transmitted or received pursuant to the TTP. As illustrated in FIG. 5, the example header 500 has 64 bytes. The first 16 bytes include a header for Ethernet layer 2 (e.g., data link layer) and virtual local area network (VLAN) operation. The second 16 bytes include the ETHTYPE followed by optional layer 3 Internet Protocol (IP) header. For supporting layer 2 operation based on TTP, the ETHTYPE can be set as a particular value (e.g., 0x9AC6). When the ETHTYPE is set as the particular value, the header 500 may signal to a network device processing the header 500 that the header 500 is formatted based on TTP. The third 16 bytes include optional fields for layer 3 (IP) operation and layer 4 operation under UDP. At the end of the third 16 bytes and the fourth 16 bytes are fields for layer 4 operation under TTP. TTP can be referred to a TTP over Ethernet (TTPoE). TTP is labeled as TTPoE in FIG. 5.

Advantageously, the example header 500 allows TTP to support operations over Ethernet based network from at least layers 2 through 4 of the OSI Model. Specifically, existing Ethernet switches and hardware may support operations associated with TTP.

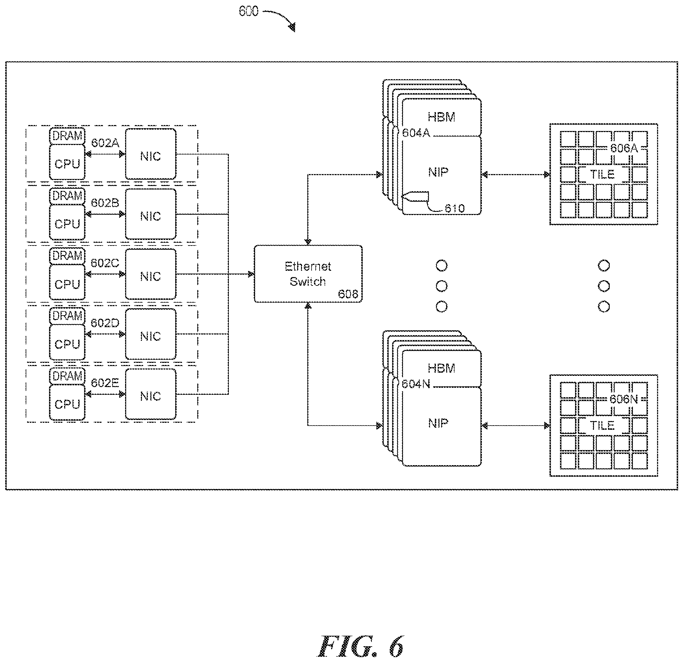

FIG. 6 illustrates an example network and computing environment 600 in which embodiments of the present disclosure can be implemented. The example network and computing environment 600 can be utilized for high-performance computing or artificial intelligence training data centers. As one example, the network and computing environment 600 can be used for neural network training to generate data for use by an autonomous driving system for a vehicle (e.g., an automobile). As shown in FIG. 6, the example network and computing environment 600 includes an Ethernet Switch 608, hosts 602A through 602E, Peripheral Component Interconnect Express (PCIe) hosts 604A through 604N, and computing tiles 606A through 606N. Although there are five hosts 602A through 602E in FIG. 6, any suitable number of hosts can be implemented that is more or less than five. Additionally, the number of PCIe hosts and the number of computing tiles can be any suitable positive integer.

Each of the hosts 602A through 602E includes a Network Interface Card (NIC), a central processing unit (CPU), and dynamic random access memory (DRAM). Although illustrated as CPU, in some embodiments, the CPU may be embodied as any type of single-core, single-thread, multi-core, or multi-thread processor, a microprocessor, digital signal processor (DSP), microcontroller, or other processor or processing/controlling circuit. Although illustrated as DRAM, in some embodiments, the DRAM may alternatively or additionally be embodied as any type of volatile or non-volatile memory or data storage, such as static random access memory (SRAM), synchronous DRAM (SDRAM), double data rate synchronous dynamic random access memory (DDR SDRAM). The DRAM may store various data and program code used during operation of the hosts 602A through 602E, including operating systems, application programs, libraries, driver, and the like.

In some embodiments, the NIC may implement TTP for communicating with the Ethernet Switch 608. Each NIC may communicate with the Ethernet Switch 608 using TTP as the flow control protocol to manage the link established between each NIC and a network interface processor (NIP) via the Ethernet Switch 608. In some embodiments, the NIC may include the PCS + PMA block 402 and the TTP MAC block 410 of FIG. 4. In some embodiments, the NIC may implement TTP without assistance of software/firmware.

As shown in FIG. 6, each of the PCIe hosts 604A through 604N may include a network interface processor (NIP) and high-bandwidth memory (HBM). In some embodiments, the bandwidth supported by the HBM can be 32 gigabytes (GB) per computing. Each of the PCIe hosts 604A through 604N may communicate with each of the computing tiles 606A through 606N. Each of the computing tiles 606A through 606N may include storage, input/output and computation resources. A computing tile 606A can include system on a wafer with an array of processors for high performance computing. In certain applications, each of the computing tiles 606A through 606N may perform 9 peta floating point operations per second (PFLOPS), store data with size of 11 gigabyte (GB) using static random access memory (SRAM), or facilitate input/output operations at the bandwidth of 36 terabyte (TB) per second.

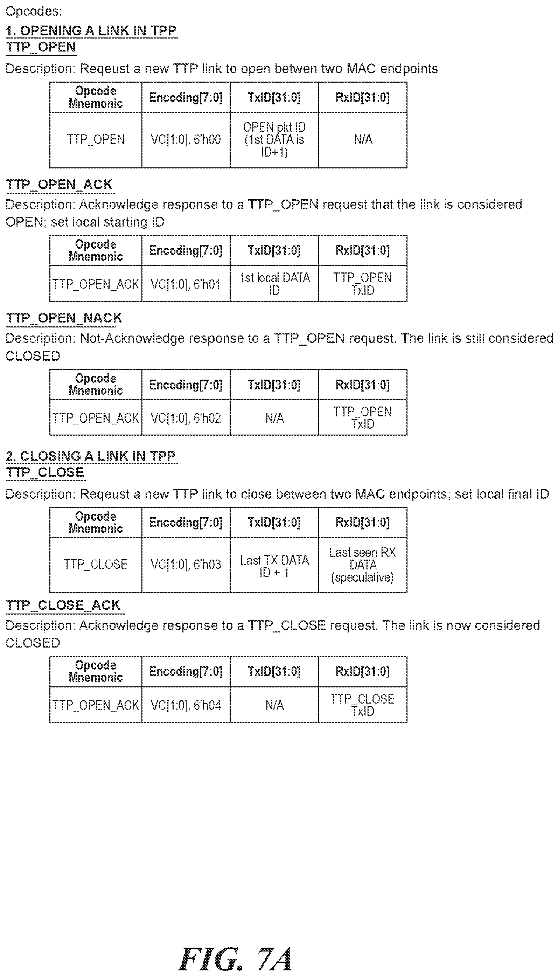

In some embodiments, each of the NICs in the hosts 602A through 602E may open and close a communication link with each of the NIPs in the PCle hosts 604A through 604N. Specifically, one NIC and one NIP may open and close a communication link with each other by implementing the state machine 200 of FIG. 2. To open and close the communication link, the NIC and the NIP may use packets that include the opcodes of FIGS. 7A-7B to perform desired operations. For example, to open a link with the NIP, the NIC may transmit a packet including the opcode TTP_OPEN (shown in FIG. 7A) to the NIP to request opening a communication link. After receiving the packet with the opcode TTP_OPEN, the NIP may transition from the closed state 202 to the open received state 204 of FIG. 2. After sending a packet with the opcode TTP_OPEN_ACK (shown in FIG. 7A), the NIP may transition from the open received state 204 to the open state 208 as illustrated in FIG. 2. In some embodiments, once a communication link is established (e.g., when the NIC and NIP are both in the open state 208), the NIC and the NIP may transmit or receive packets with each other using the header 500 of FIG. 5. In other words, each of the packets transmitted or received between the NIC and the NIP may include the header 500 of FIG. 5.

As indicated in FIG. 6, the communication and data exchange between each of the hosts 602A through 602E, each of the PCIe hosts 604A through 604N, each of the computing tiles 606A through 606N, or the Ethernet Switch 608 can be conducted based on the TTP. With the shorter latency (in comparison with TCP) accomplished through TTP using techniques described above, the high-bandwidth and high-speed communication among various elements of FIG. 6 can be achieved. In some embodiments, at least a portion of the NIPs or at least a portion of the NICs illustrated in FIG. 6 may be implemented similar or the same as the node 400 of FIG. 4. Although not illustrated throughout FIG. 6, in some embodiments each of the NICs and NIPs may include a port 610 through which packets can be received and transmitted. In some embodiments, the port 610 is an Ethernet port.

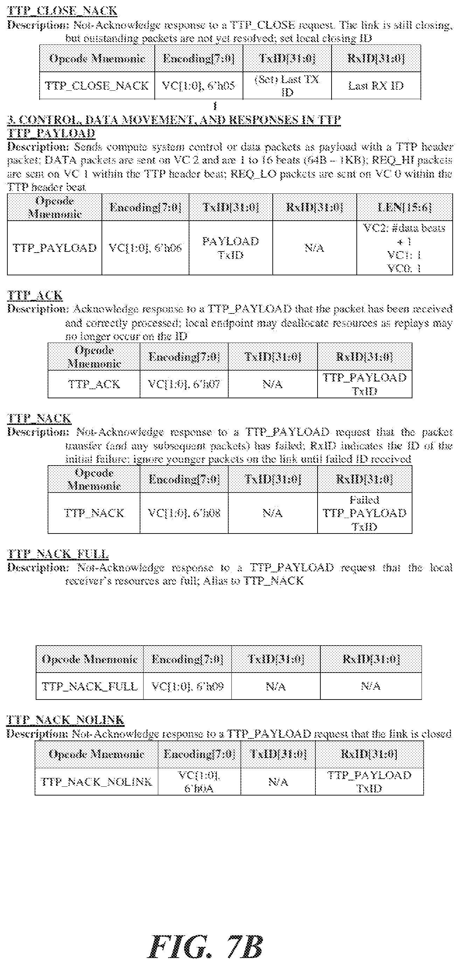

FIGS. 7A-7B show opcodes of different types of TTP packets in accordance with embodiments of the present disclosure. The TTP packets shown in FIG. 7A and FIG. 7B are utilized in FIGS. 2, 3A, and 3B for closing and opening a link between nodes of networks. The TTP packets can be exchanged between nodes in the network and computing environment of Figure 6. The TTP packets shown in FIG. 7A and FIG. 7B can be better understood in conjunction with FIGS. 2, 3A and 3B.

### Packet Replay Hardware Architecture

Referring back to FIG. 4 that illustrates the example block diagram of the node 400 that transmit and/or receives packets using TTP a replay hardware architecture will be described. As noted above, the node 400 may include blocks such as the Physical Coding Sublayer (PCS) + Physical Medium Attachment (PMA) block 402 and the TTP Medium Access Control (MAC) block 410 that includes the TTP FSM 422 for handling communications from layer 1 through layer 4 of the OSI Model without software assistance to reduce latency associated with communication in layer 1 through layer 4. Additionally, the TTP Medium Access Control (MAC) block 410 of the node 400 may include a hardware replay architecture that includes at least the TTP (peers link) tag block 436, the RX Datapath 432, the RX storage 432-1 (e.g., on die SRAM), the TX Datapath 434, and the TX storage 434-1 (e.g., on die SRAM). The hardware replay architecture can replay packets that are lost during transmission under a lossy protocol, such as the TTP. Optionally, the TTP Medium Access Control (MAC) block 410 of the node 400 may further include a TTP MAC RDMA Address Encoding block 438 that may receive and encode RDMA send data 418 from the System-on-chip (SoC) 420.

In some embodiments, the hardware replay architecture of the node 400 for replaying packets may include at least circuitry of the TTP tag block 436, the RX Datapath 432, the RX storage 432-1, the TX storage 434-1, and the TX Datapath 434. As discussed above, the hardware replay architecture may utilize physical storage and data structure to store packets transmitted and/or received in different links and maintain the order of packets transmitted, in particular when replay occurs. In some embodiments, the physical storage utilized by the hardware replay architecture may be any suitable type of local storage or cache (e.g., low-level caches) that can store, buffer, and/or hold packets associated with one or more links. The physical storage may be limited in size, such as having a size in the order of megabytes (MB) or kilobytes (KB). In some examples, the physical storage may be deployed as a part of the TX Datapath 434, or more specifically, as a part of the TX storage 434-1. The physical storage may also be deployed as a part of the RX Datapath 432, or more specifically, as a part of the RX storage 432-1. For example, the physical storage may be the RX storage 432-1 and the TX storage 434-1, where the size of the RX storage 432-1 and the TX storage 434-1 utilized by the hardware replay architecture associated with each of the RX Datapath 432 and the TX Datapath 434 may be 256 KB. In other examples, the physical storage may be deployed within and as a part of the TTP tag block 436 (e.g., as a local storage deployed within the TTP tag block 436).

It should be noted that any other suitable size of the physical storage can be adopted by the hardware replay architecture within the TTP Medium Access Control (MAC) block 410 of the node 400. In some embodiments, data structure (e.g., within the TTP tag block 436) utilized by the hardware replay architecture may include one or more linked lists, where each linked list may record and/or track the order of packets transmitted for a corresponding link established between a first communication node and a second communication node. In some embodiments, the TTP tag block 436 may utilize the linked lists along with the physical storage (e.g., RX storage 432-1 and TX storage 434-1) to maintain and manage stored packets to replay packets transmitted over multiple links.

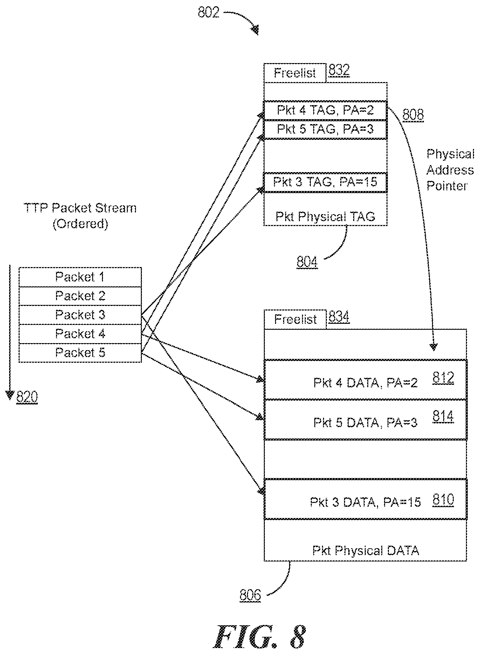

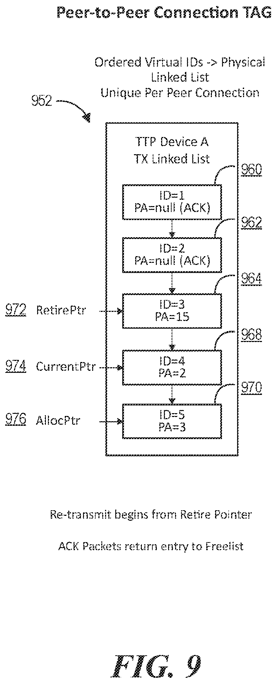

FIGS. 8 and 9 illustrate example physical storage and data structure (e.g., a TX linked list 952) utilized by a node (e.g., the node 400 or the device A of FIG. 3B) in an Ethernet-based network that implements TTP for replaying or retransmitting packets in accordance with some embodiments of the present disclosure. FIGS. 8 and 9 can be understood in conjunction with reference to FIG. 3B that shows the device A replays two packets (e.g., TTP_PAYLOAD ID = 3 to 4) responsive to receiving a non-acknowledgement packet (e.g., TTP_NACK ID = 3) notifying that a packet (TTP_PAYLOAD ID = 3) is not received.

Referring to FIG. 8, the device A of FIG. 3B can store the Packet 1 (e.g., packet TTP_PAYLOAD ID = 1 of FIG. 3B), Packet 2 (e.g., packet TTP_PAYLOAD ID = 2 of FIG. 3B), Packet 3 (e.g., packet TTP_PAYLOAD ID = 3 of FIG. 3B), Packet 4 (e.g., packet TTP_PAYLOAD ID = 4 of FIG. 3B), Packet 5 (e.g., packet TTP_CLOSE ID = 5 of FIG. 3B) for transmission and/or replay in a physical storage, e.g., the packet physical cache 802. As noted above, the packet physical cache 802 may be the TX storage 434-1 and/or may be a physical storage deployed within the TTP tag block 436. In some embodiments, the packet physical cache 802 may have two storage spaces - a packet physical tag 804 and a packet physical data 806. For each of the packets (e.g., Packet 1 through Packet 5), the packet physical tag 804 may include a physical address pointer that points to a physical address in the packet physical data that stores the packet. For example, the physical address pointer 808 associated with Packet 4 stored in an entry of the packet physical tag 804 may point to an entry of the packet physical data 806 where Packet 4 (e.g., packet TTP_PAYLOAD ID = 4 of FIG. 3B) is stored. As illustrated in FIG. 8, the device A may transmit Packet 1, Packet 2, Packet 3, Packet 4 and Packet 5 in the order 820 (e.g., transmitting Packet 1 first and Packet 5 last). However, the device A may not store Packet 1 through Packet 5 in the packet physical data 806 based on the order 820. Specifically, although the device A transmits Packet 3 before Packet 4 and 5, the address 810 in the packet physical data 806 that stores Packet 3 may be following the address 812 and the address 814 in the packet physical data 806 that store Packet 4 and Packet 5, respectively.

FIG. 9 illustrates the TX linked list 952 that can be utilized by the node 400 and/or device A of FIG. 3B to maintain order of packet transmission between previous transmission and replay. The TX linked list 952 may be a part of the TTP tag block 436 of the node 400. As noted above in discussing FIG. 8, the device A of FIG. 3B may store Packet 1 through Packet 5 at various addresses of the packet physical data 806 that do not reflect the order 820 with which Packet 1 through Packet 5 are to be transmitted. Nonetheless, the device A may utilize the TX linked list 952 to keep track of and maintain the desired order of transmitting Packet 1 through Packet 5. As shown in FIG. 9, the TX linked list 952 includes five elements 960, 962, 964, 968, 970, where each element corresponds to or is associated with one of the Packet 1 through Packet 5. FIG. 9 illustrates that the TX linked list 952 tracks and maintains the order 820 of transmitting Packet 1 through Packet 5. For example, in the TX linked list 952, the element 964 corresponding to Packet 3 comes before and points to the element 968 corresponding to Packet 4, and the element 968 corresponding to Packet 4 comes before and points to the element 970 corresponding to Packet 5. As such, by utilizing the TX linked list 952, the device A may maintain order of packet transmission during previous transmission and replay, where the replay may be triggered responsive to receiving the TTP_NACK ID = 3 packet notifying that the packet with TTP_PAYLOAD ID = 3 is not received by the device B in FIG. 3B. The replay can be triggered responsive to a timeout or non-acknowledgement in accordance with any suitable principles and advantages disclosed herein.

As shown in FIG. 9, the device A of FIG. 3B may further use one or more pointers 972, 974 and 976 stored in memory to determine which packet(s) to replay. As illustrated in (3) and (4) of FIG. 3B, the device A transmits four packets (e.g., TTP_PAYLOAD ID = 1 to 4) and receives three packets (e.g., TTP_ACK ID = 1 to 2, and TTP_NACK ID = 3), acknowledging the reception of the two packets (ID = 1 to 2) transmitted by the device A but notifying that the packet with TTP_PAYLOAD ID = 3 is not received. In response, device A may set the pointer 972 to point to the element 964 that corresponds to Packet 3 to indicate that device A is to replay packets starting from Packet 3. Device A may further set pointer 974 to point to the element 968 that corresponds to Packet 4 to indicate device A is also to replay Packet 4 in addition to Packet 5. Device may further set pointer 976 to point to the element 970 that corresponds to Packet 5 to indicate device A may transmit Packet 5 after replaying Packet 3 and Packet 4. Additionally, device A may set the element 960 and element 962 of the TX linked list 952 to null to indicate that Packet 1 and Packet 2 can be removed from the addresses (not shown in FIG. 8) of the packet physical data 806 and the packet physical tag 804 to free up more storage space for storing packets transmitted or received by device A.

Thereafter, based on the TX linked list 952, pointer 972 and pointer 974, device A may replay Packet 3 and Packet 4 as illustrated in (5) of FIG. 3B. Then, device A may receive acknowledgement of receiving Packet 3 and Packet 4 as illustrated in (6) of FIG. 3B. In response, based on the TX linked list 952, device A may transmit Packet 5 (e.g., packet TTP_CLOSE ID = 5 of FIG. 3B) that corresponds to element 970 of the TX linked list 952 to complete transmission and replay of Packet 1 through Packet 5. Additionally and/or optionally, device A may release storage occupied by Packet 1 through Packet 5 after all packets corresponded to elements of the TX linked list 952 have been transmitted and replayed. In some embodiments, device A may indicate addresses in packet physical tag 804 and addresses in packet physical data 806 have been released and free for use in conjunction with other linked list(s) that correspond to other packets by setting the free list entry 832 and free list entry 834 to a particular value, respectively.

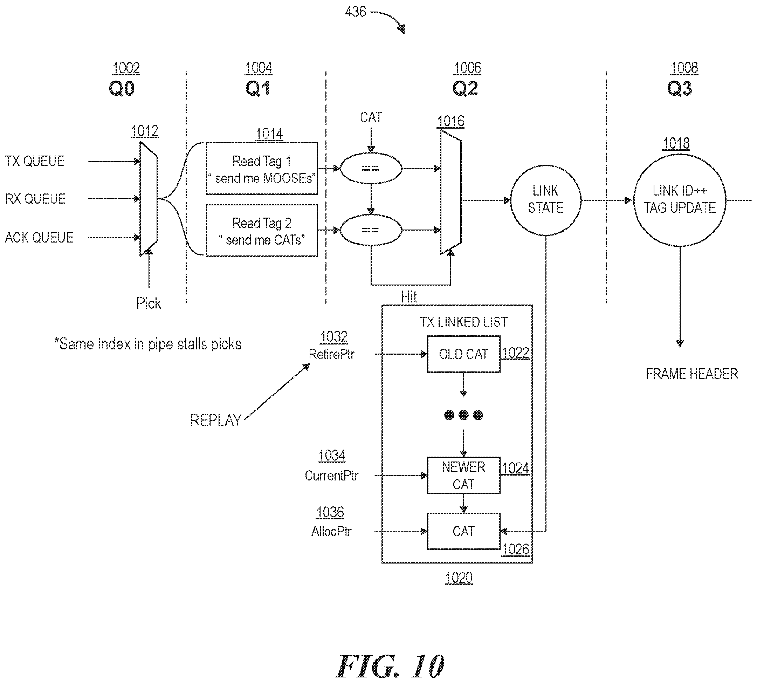

FIG. 10 illustrates an example block diagram of the TTP tag block 436 of FIG. 4 according to some embodiments of the present disclosure, where the TTP tag block 436 is a part of a hardware replay architecture for replaying packets transmitted over multiple links. As shown in FIG. 10, the TTP tag block 436 can include memory storing a TX linked-list 1020 and logic circuitry 1012, 1014, 1016, and 1018 that operate respectively in the pipelined stages 1002, 1004, 1006, and 1008. The logic circuitry 1012, 1014, 1016, and 1018 can be implemented by any suitable physical circuitry. In some examples, some or all of the logic circuitry 1012, 1014, 1016 and 1018 may be implemented by dedicated circuitry, such as in the form of Application Specific Integrated Circuit (ASIC). In some examples, some or all of the logic circuitry 1012, 1014, 1016 and 1018 may be implemented by programmable logic gates or general purpose processing circuitry, such as in the form of Field Programmable Gate Array (FPGA) or Digital Signal Processor (DSP). In operation, the TX linked-list 1020 may function similarly to the TX linked list 952 of FIG. 9. In some embodiments, the TX linked-list 1020 tracks order of N packets that include packet 1022, packet 1024, and packet 1026, where the node 400 may transmit the N packets tracked by the TX linked-list 1020 over a particular link. The TTP tag block 436 further includes pointer 1032, pointer 1034 and pointer 1036 that respectively points to packet 1022, packet 1024 and packet 1026. The TTP tag block 436 may store the pointer 1032, the pointer 1034, and the pointer 1036 in any suitable storage element (not shown in FIG. 10). In certain applications, the N packets that include the packet 1022, packet 1024, and packet 1026 of the TX linked-list 1020 may be stored in a physical storage, such as the TX storage 434-1 of the TX Datapath 434 of the node 400. In such applications, the TX linked-list 1020 can include pointers to the packets 1022, 1024, 1026. In other applications, the N packets that include the packet 1022, packet 1024, and packet 1026 may be a part of the TX linked-list 1020 stored in a physical storage within the TTP tag block 436.

In some embodiments, the node 400 may store the N packets (including the packet 1022, packet 1024 and packet 1026) that were transmitted to a second node using a link established under TTP in the TX storage 434-1 (or other physical storage of the node 400), N being any positive integer that may be limited by the size of the TX storage 434-1. The node 400 may continually transmit some or all of the N packets to the second node so long as constraints from the TTP and/or network conditions permit. To accommodate replaying the N packets that include packet 1022, packet 1024 and packet 1026, the TX storage 434-1 may continue to store one or more packets (e.g., packet 1022) already transmitted until acknowledgement of receiving the one or more packets is received from the second node. A packet can be stored until receipt of previously transmitted packets is acknowledged. When acknowledgement of receiving a packet is received, the TX storage 434-1 may discard the packet to make out space for storing packets to be transmitted over the link or other links between the node 400 and the second node and/or one or more other nodes. In contrast, if a non-acknowledgement of the packet is received (e.g., the second node notifying the node 400 that the packet is not received) or a timeout occurs without receiving an acknowledgement or non-acknowledgement of receiving the packet from the second node, the node 400 may replay the packet (e.g., retransmit the packet to the second node) that is still stored in the TX storage 434-1. In association with replaying the packet, the node 400 may discard other packets with which acknowledgement of reception has been received. In some embodiments, the TX linked-list 1020 may coordinate with the TX storage 434-1 to maintain the order between previous transmission of some or all of the N packets that include the packet 1022, packet 1024 and packet 1026 and any replay afterwards. As shown in FIG. 10, the TX linked-list 1020 includes N elements, where each element corresponds to or includes each of the N packets and a reference to the next element that corresponds to the next packet.

When transmitting and/or replaying the N packets, the TTP tag block 436 may further utilize the pointer 1032, pointer 1034 and pointer 1036 that respectively point to three elements in the TX linked-list 1020 to determine if a packet is to be kept for replaying or can be discarded by the TX storage 434-1 to conserve storage resources. Take N being 9 (e.g., 9 packets transmitted from the node 400 to the second node) as an example, in the TX linked-list 1020, a 1^{st} element corresponds to a 1^{st} packet (e.g., packet 1022) and a 1^{st} reference, where the 1^{st} reference points to a 2^{nd} element; the 2^{nd} element corresponds to a 2^{nd} packet and a 2^{nd} reference, where the 2^{nd} reference points to a 3^{rd} element; and the 8^{th} element corresponds to the 8^{th} packet (e.g., packet 1024) and a 8^{th} reference, where the 8^{th} reference points to a 9^{th} element; and the 9^{th} element corresponds to the 9^{th} packet (e.g., packet 1026). The TTP tag block 436 may maintain and update three pointers 1032, 1034 and 1036 that respectively point to the 1^{st} element (e.g., packet 1022), the 8^{th} element (e.g., packet 1024) and the 9^{th} element (e.g., packet 1026).

Further assuming the node 400 has transmitted the 1^{st} through 9^{th} packets and has received acknowledgement from the second node of receiving the 1^{st} through 7^{th} packets but not the 8^{th} and 9^{th} packets, the pointer 1032 then points to the 1^{st} element (e.g., packet 1022) of the TX linked-list 1020, the pointer 1034 then points to the 8^{th} element (e.g., packet 1024) of the TX linked-list 1020, and the pointer 1036 then points to the 9^{th} element (e.g., packet 1026) of the TX linked-list 1020. As such, the TTP tag block 436 may cause the TX storage 434-1 to discard some or all of the N packets that include the packet 1022, packet 1024 and packet 1026, and replay some or all of the N packets based on the pointers 1032, 1034 and 1036. More specifically, the TX storage 434-1 may replay the packet 1024 that is pointed by the pointer 1034 through the packet 1026 that is pointed by the pointer 1036 (in this case, only the packet 1024 and the packet 1026 are replayed). The TX storage 434-1 may further discard remaining packets (e.g., the packet 1022 pointed by the pointer 1032 and other packets previously transmitted before the packet 1024; in this case, seven packets including the packet 1022 can be discarded).

As illustrated in FIG. 10, some or all of the TTP tag block 436 (e.g., the logic circuitry 1012, 1014, 1016, and 1018) may operate in a pipelined manner to increase throughput of the node 400. The logic circuitry 1012, 1014, 1016 and 1018 may operate in conjunction with the TX linked-list 1020 to determine whether packets should be replayed or be discarded/retired from the TX storage 434-1 or other physical storage of the node 400 that stores the packets. As shown in FIG. 10, the logic circuitry 1012, 1014, 1016, and 1018 may operate at respective pipelined stages according to a clock upon which the TTP tag block 436 operates. Specifically, the logic circuitry 1012 operates at the initial pipelined stage 1002 (labeled as "Q0"), the logic circuitry 1014 operates at the first pipelined stage 1004 (labeled as "Q1"), the logic circuitry 1016 operates at the second pipelined stage 1006 (labeled as "Q2"), and the logic circuitry 1018 operates at the third pipelined stage 1008 (labeled as "Q3").

In operation, the logic circuitry 1012 may select one of the data streams to process in the TTP link tag pipeline. As shown in the initial pipelined stage 1002, the logic circuitry 1012 may select, based on a control signal (e.g., "Pick"), one of transmitting stream ("TX QUEUE"), receiving stream ("RX QUEUE") or acknowledging stream ("ACK QUEUE") for processing in the TTP link tag pipeline. In the TTP link tag pipeline, logic circuitry determines whether to replay one or more packets of a selected data stream or to retire one or more packets of the selected data stream. The TTP link tag pipeline can also determine to reject an acknowledgement of a packet transmitted after another packet that the TTP tag pipeline determines to replay.

Assuming the logic circuitry 1012 selects the transmitting stream to prepare for replaying packets, then at the first pipelined stage 1004 the logic circuitry 1014 determines which link to evaluate for replaying. This can involve reading tags associated with the links. As shown in FIG. 10, the logic circuitry 1014 can select one of two links (e.g., "MOOSEs" and "CATs") for possibly replaying, where each link may be established between the same endpoint or different endpoints. For example, both links "MOOSEs" and "CATs" may be established between the node 400 and a second node; alternatively, the link "MOOSEs" may be established between the node 400 and a second node while the link "CATs" may be established between the node 400 and a third node. The logic circuitry 1014 may select the link (e.g., "CATs") for replaying based on a link pointer that points to the link selected.

Then, at the second pipelined stage 1006, the logic circuitry 1016 may determine which packet(s) that were transmitted over the link "CATs" be replay or retire. In some embodiments, the logic circuitry 1016 determines to replay some of the packets transmitted over the link "CATs" while other packets can be retired based on whether acknowledgement or non-acknowledgement of reception has been received. For example, the logic circuitry 1016 may determine to replay the packet 1024 if a receipt of a non-acknowledgement of the packet 1024 is received or acknowledgement of the packet 1024 has not been received over a time period that triggers timeout. In contrast, the logic circuitry 1016 may determine to retire the packet 1022 in response to a receipt of an acknowledgement of the packet 1022. Additionally and/or optionally, the logic circuitry 1016 may further determine to replay and/or retire other packets transmitted over the link "CATs" based on the TX linked-list 1020. For example, based on the order of the packets transmitted over the link "CATs" specified by the TX linked-list 1020 showing that the packet 1026 was transmitted after the packet 1024, the logic circuitry 1016 may determine to replay the packet 1026 along with replaying the packet 1024 in response to the receipt of the non-acknowledgement of the packet 1024. The logic circuitry 1016 may further cause the TX storage 434-1 to retire packets that were transmitted between the packet 1022 and the packet 1024 to make out more available storage space in the TX storage 434-1, assuming acknowledgements of the packets that were transmitted between the packet 1022 and the packet 1024 have been received. In the second pipelined stage 1006, an acknowledgement for a packet can be rejected in association with determining to replay an earlier transmitted packet. Retiring a packet can involve allowing other data to be written to memory in place of the packet and/or deleting the packet from memory.

Thereafter, at the third pipelined stage 1008, the logic circuitry 1018 may update a link pointer that points to the link "CATs" to point to another link (e.g., link "MOOSEs"). As such, in a following round of pipelined operation, the logic circuitry 1012, 1014, 1016 and 1018 may operate to determine whether to replay packet(s) associated with the link "MOOSEs" based on another TX linked-list (not shown in FIG. 10) that includes, refers, or corresponds to the packets transmitted over the link "MOOSEs". Advantageously, using the TX storage 434-1 and the TX linked-list 1020 to implement replay functionality enables the node 400 to communicate with the second node using TTP under limited hardware resources without the assistance of software controlled mechanisms.

### Hardware Link Timer

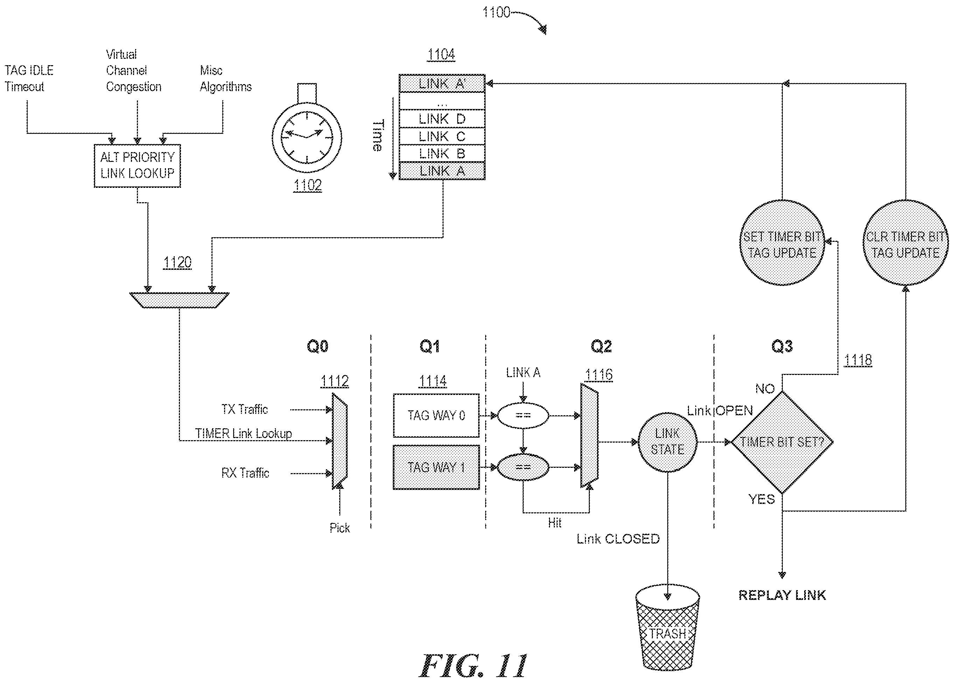

FIG. 11 illustrates an example block diagram of a hardware link timer 1100 that implements timeout check mechanisms for replaying packets without assistance of software. In some embodiments, the hardware link timer 1100 may be a part of the node 400 of FIG. 4. Some or all of the hardware link timer 1100 may be deployed within the TTP tag block 436 of FIG. 4. As noted above, in contrast to other Ethernet protocols (e.g., TCP or UDP) with which software is typically employed to track timeouts over multiple links using multiple timers (e.g., one timer for one link), the hardware link timer 1100 may allow the node 400 to determine which packet(s) transmitted over which link(s) to replay and, if replay is desired, when to replay under limited hardware resources (e.g., when large resource pools of virtual and/or physical address space and computing resources are not available). In some embodiments, the hardware link timer 1100 may periodically perform a timing check on established links (e.g., active links) utilized by the node 400 to communicate with one or more other nodes pursuant to TTP.

As shown in FIG. 11, the hardware link timer 1100 may include a first-in-first-out (FIFO) memory 1104, a timer 1102 and logic circuitry 1120, 1112, 1114, 1116 and 1118, where the logic circuitry 1112, 1114, 1116 and 1118 may be a part of the TTP tag block 436 for replaying packets. The FIFO memory 1104 can store timing and status information associated with each of the active links. The hardware link timer 1100 can check timing and status associated with each of the active links stored in the FIFO memory 1104 in a round-robin manner. More specifically, the hardware link timer 1100 may start checking timing and status information associated with a first link stored in a first entry of the FIFO memory 1104 toward timing and status information associated with a N^{th} link stored in a N^{th} entry of the FIFO memory 1104 and then again check the timing and status information associated with the first link stored in the first entry of the FIFO memory 1104. The hardware link timer 1100 may utilize the timer 1102 to schedule points in time to read out timing and status information associated with multiple active links and/or packets. The read out timing and status information may be used for determining whether to replay packets associated with a link or to retire and/or discard the packets through further information look up. It should be noted that the node 400 of FIG. 4 may include more than one hardware link timer similar to what is illustrated in FIG. 11, where each hardware link timer may be able to determine whether there is a timeout associated with a plurality of links.

In some embodiments, the FIFO memory 1104 can store timing information associated with one or more links established between the node 400 and other node(s). For example, the node 400 may include the hardware link timer 1100 that uses the FIFO memory 1104 to store timing information associated with M links established between the node 400 and one or more other nodes, with M being a positive integer greater than one. Instead of using M timers where each timer tracks timing information of a corresponding link, the hardware link timer 1100 may utilize the timer 1102 (e.g., a hardware clock that ticks once for a programmable time period) for tracking and/or updating timing information for each of the M links through accessing the FIFO memory 1104 in a round-robin (e.g., circular) manner. Specifically, the hardware link timer 1100 may access entries of the FIFO memory 1104 in the round-robin manner one at a time when the timer 1102 ticks once, where each accessed entries of the FIFO memory 1104 corresponds to one of the M links.

In some embodiments, the time period of each tick of the timer 1102 may vary and may be in the order between hundreds of microseconds to a single digit microsecond. For example, the time period of a tick of the timer 1102 may be up to 100 microseconds and may be down to 1 microsecond. Additionally, the hardware link timer 1100 may adjust the time period of a tick of the timer 1102 based on number of links (e.g., M) represented by entries of the FIFO memory 1104. For example, when M increases (e.g., more links represented by entries of the FIFO memory 1104), the time period of a tick of the timer 1102 may decrease; and when M decreases (e.g., fewer links represented by entries of the FIFO memory 1104), the time period of a tick of the timer 1102 may increase. As such, a time interval within which a status and/or timing information of a link is checked may remain unchanged if the time period of a tick of the timer 1102 changes disproportionally to the number of links represented by entries of the FIFO memory 1104.

In some embodiments, timing and/or status information associated with one of the M links may indicate how long the link has not received acknowledgement of receiving packets that were transmitted. Assuming the node 400 has transmitted N packets over the link to a second node, one entry of the FIFO memory 1104 may store timing and/or status information that, when accessed through the round-robin manner under a particular time period of a tick of the timer 1102, indicates acknowledgement of receiving any of the N packets has not been received for over a predetermined duration (e.g., 20 microseconds, 50 microseconds, 100 microseconds, 200 microseconds, 300 microseconds, 400 microseconds, 500 microseconds and/or any duration in between). Upon accessing the entry of the FIFO memory 1104, the hardware link timer 1100 may utilize the logic circuitry 1120, 1112, 1114, 1116, and 1118 to check timing and/or status information stored in the entry and to look up the N packets that may be stored in a local storage (e.g., the TX storage 434-1 or other local storage) of the node 400 for replaying the N packets.

Alternatively, timing and/or status information associated with one of the M links may be stored in one entry of the FIFO memory 1104 to indicate the link can be closed (e.g., all packets transmitted by the first node have been received by the second node). Upon accessing the entry of the FIFO memory 1104, the hardware link timer 1100 may utilize the logic circuitry 1120, 1112, 1114, 1116, and 1118 to check timing and/or status information stored in the entry and to look up packets that may still be stored in the local storage (e.g., the TX storage 434-1) of the node 400, and discard the packets because the timing and/or status information stored in the entry of the FIFO memory 1104 indicates that the link can be closed. Advantageously, by utilizing a single timer (e.g., the timer 1102) that ticks under adjustable periods for multiple links and/or packets and a FIFO memory 1104 that stores timing and/or status information of the multiple links, the node 400 may replay packets at proper timing to achieve low latency and release hardware resources occupied by inactive links (e.g., closed links) for use by active links to operate under limited computing and storage resources.

As illustrated in FIG. 11, the logic circuitry 1120, 1112, 1114, 1116 and 1118 may operate in different pipelined stages, similar to the logic circuitry 1012, 1014, 1016 and 1018 illustrated in FIG. 10. As shown in FIG. 11, the logic circuitry 1120, 1112, 1114, 1116 and 1118 may operate in conjunction with the timer 1102 and the FIFO memory 1104 to determine when packets transmitted over one or more links need to be replayed or can be retired/discarded from a local storage, such as the TX storage 434-1, or whether the one or more links can be closed. As shown in FIG. 11, the logic circuitry 1120, 1112, 1114, 1116 and 1118 may operate at respective pipelined stages according to a clock upon which the hardware link timer 1100 operates. Specifically, the logic circuitry 1120 and 1112 may operate at the initial pipelined stage (labeled as "Q0"), the logic circuitry 1114 may operate at the first pipelined stage (labeled as "Q1"), the logic circuitry 1116 may operate at the second pipelined stage (labeled as "Q2"), the logic circuitry 1118 may operate at the third pipelined stage (labeled as "Q3").

In operation, at the initial pipelined stage Q0, the logic circuitry 1120 may select timing and status information to be used for timing and status information lookup (e.g., the TIMER Link Lookup) for logic circuitry 1112. As shown in FIG. 11, the timing and status information may come from an entry (e.g., the oldest entry that comes into the FIFO memory 1104 earlier than all other entries) from the FIFO memory 1104 or from other sources (e.g., alternative priority link lookup information). As illustrated in FIG. 11, at the initial pipelined stage Q0, the timing and status information associated with the "Link A" in the FIFO memory 1104 is selected by the logic circuitry 1112 based on a control signal (e.g., "Pick") that selects the "TIMER Link Lookup" rather than "TX Traffic" or "RX Traffic". The "TX Traffic" may correspond to packets transmitted over a link (e.g., "Link B") established by the node 400 while "RX Traffic" may correspond to packets received over another link (e.g., "Link D") established by the node 400.

At the first pipelined stage Q1, the logic circuitry 1114 determines which link is being queried based on the timing and status information received from the initial pipelined stage Q0. As illustrated in FIG. 11, the logic circuitry 1114 determines that "Link A" is being queried for later determination of whether "Link A" need to be replayed or can be closed. Then, at the second pipelined stage Q2, the logic circuitry 1116 determines whether "Link A" can be closed based on the timing and status information associated with "Link A" accessed from the FIFO memory 1104. If the timing and status information associated with "Link A" shows that "Link A" can be closed, the logic circuitry 1116 may trigger packets associated with "Link A" to be retired/discarded from a local storage (e.g., the TX storage 434-1). If the timing and status information associated with "Link A" shows that "Link A" is still active/open, then operation of the hardware link timer 1100 proceeds to the third pipelined stage Q3, where the logic circuitry 1118 determines whether to replay packets transmitted over "Link A" or how to update timing and status information associated with "Link A."

At the third pipelined stage Q3, the logic circuitry 1118 may determine to replay at least some packets associated with "Link A" based on the status and timing information associated with "Link A" that is accessed from the FIFO memory 1104. For example, the status and timing information associated with "Link A" may include a "TIMER BIT" that when set (e.g., to logic 1) may indicate that an acknowledgement of receiving at least one packet of the packets associated with "Link A" has not been received by the node 400 over a threshold duration for replaying packets. In some embodiments, the threshold duration may be adjustable and may be 20 microseconds, 50 microseconds, 100 microseconds, 200 microseconds, 300 microseconds, 400 microseconds, 500 microseconds and/or any suitable duration in between. The threshold duration can be in a range from 20 microseconds to 500 microseconds. In some embodiments, the "TIMER BIT" associated with the "Link A" (and/or other links) may be set based on a number of times "Link A" has been queried from the FIFO memory 1104 and a time period of the timer 1102.

If the "TIMER BIT" is asserted, the logic circuitry 1118 may cause the packets associated with "Link A" to be replayed. The "TIMER BIT" being asserted can indicate that the timeout associated with one or more packets has occurred (e.g., the threshold duration has been reached without receiving an acknowledgement or non-acknowledgement). Additionally, the logic circuitry 1118 may update the timing and status information associated with "Link A" stored in the FIFO memory 1104 in response to the replay of "Link A." For example, the logic circuitry 1118 may clear the "TIMER BIT" (e.g., set the "TIMER BIT" from logic 1 to logic 0). On the other hand, if status and timing information associated with "Link A" indicates not to replay one or more packets on "Link A" (e.g., the "TIMER BIT" is not asserted, which corresponds to being logic 0 in FIG. 11), the logic circuitry 1118 may not cause "Link A" to be replayed. In such a situation, the logic circuitry 1118 may further set the "TIMER BIT" to logic 1 if the timing and status information associated with "Link A" indicates that "Link A" should be replayed if queried for a next time.

### Example Methods of Replay and Link Timing

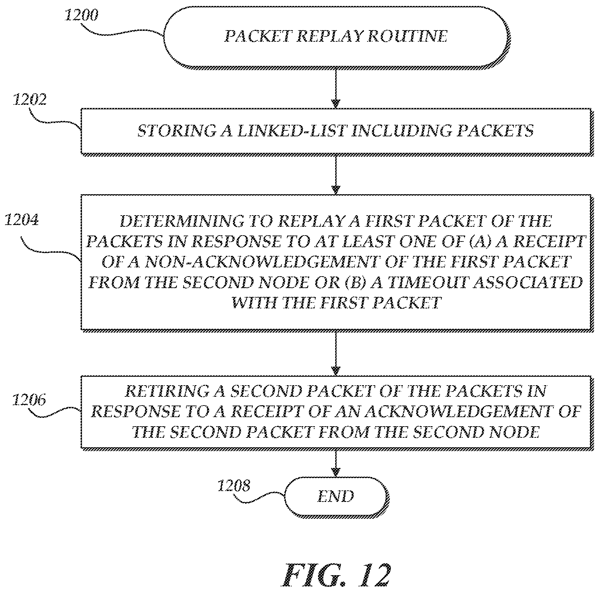

Turning now to FIG. 12, an illustrative packet replay procedure 1200 for replaying packets that are transmitted from a node, such as the node 400 or device A of FIG. 3B, will be described. The packet replay procedure 1200 may be implemented, for example, by the TTP tag block 436 or other components of the node 400 of FIG. 4. The procedure 1200 begins at block 1202, where the TTP tag block 436 may store a linked-list including packets that are transmitted over a first link from the node 400 to a second node using an Ethernet protocol. For example, the linked-list may be the TX linked-list 1020 that includes or refers to packets 1022, 1024 and 1026 to maintain an order of the packets 1022, 1024 and 1026 for transmitting to the second node.

At block 1204, the TTP tag block 436 may determine to replay a first packet of the packets in response to at least one of (a) a receipt of a non-acknowledgement of the first packet from the second node or (b) a timeout associated with the first packet. For example, the TTP tag block 436 may determine to replay the packet 1024 in response to (a) a receipt of a non-acknowledgement of the packet 1024 from the second node or (b) a timeout associated with the packet 1024, indicating acknowledgement of the packet 1024 has not been received for over a threshold time period.

At block 1206, the TTP tag block 436 may retire a second packet of the packets in response to a receipt of an acknowledgement of the second packet from the second node. For example, the TTP tag block 436 may retire the packet 1022 in response to a receipt of an acknowledgement of the packet 1022 from the second node.

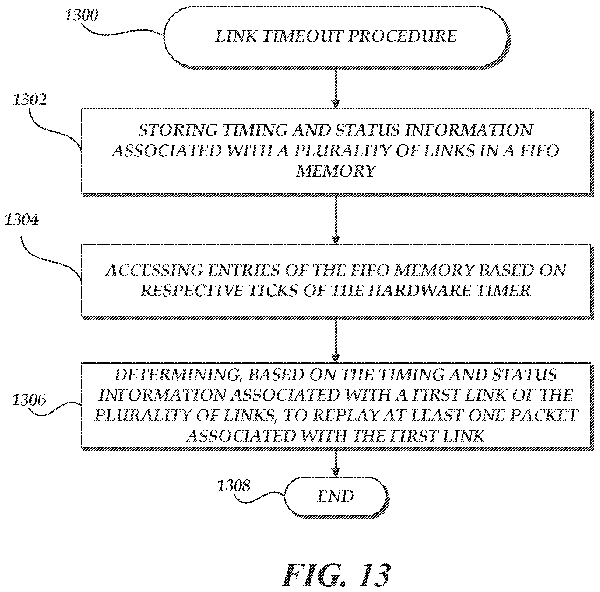

FIG. 13 illustrates an example link timeout procedure 1300 for determining whether to replay one or more links associated with a node, such as the node 400 or device A of FIG. 3B. The link timeout procedure 1300 may be implemented, for example, by the hardware link timer 1100 of FIG. 11 or the node 400. The procedure 1300 begins at block 1302, where the hardware link timer 1100 or the node 400 stores timing and status information associated with a plurality of links in a FIFO memory, and the node 400 transmits packets over the plurality of links to one or more other nodes using an Ethernet protocol. For example, the hardware link timer 1100 may store timing and status information associated with the plurality of links in the FIFO memory 1104.

At block 1304, the hardware link timer 1100 or the node 400 may access entries of the FIFO memory based on respective ticks of a hardware timer deployed within the hardware link timer 1100 or the node 400. For example, the hardware link timer 1100 may access entries of the FIFO memory 1104 based on respective ticks of the timer 1102.

At block 1306, the hardware link timer 1100 or the node 400 may determine, based on timing and status information associated with a first link of the plurality of links, to replay at least one packet associated with the first link. For example, the hardware link timer 1100 may determine, based on timing and status information associated with the "Link A," to replay at least one packet associated with or transmitted over the "Link A."

### Conclusion

The foregoing disclosure is not intended to limit the present disclosure to the precise forms or particular fields of use disclosed. As such, it is contemplated that various alternate embodiments and/or modifications to the present disclosure, whether explicitly described or implied herein, are possible in light of the disclosure. Having thus described embodiments of the present disclosure, a person of ordinary skill in the art will recognize that changes may be made in form and detail without departing from the scope of the present disclosure. Thus, the present disclosure is limited only by the claims.

It is to be understood that not necessarily all objects or advantages may be achieved in accordance with any particular example described herein. Thus, for example, those skilled in the art will recognize that some examples may be operated in a manner that achieves or optimizes one advantage or group of advantages as taught herein without necessarily achieving other objects or advantages as may be taught or suggested herein.

All of the processes described herein may be embodied in, and fully automated via, software code modules executed by a computing system that includes computers or processors. The code modules may be stored in any type of non-transitory computer-readable medium or other computer storage device. Some or all the methods may be embodied in specialized computer hardware.

Many other variations than those described herein will be apparent from this disclosure. For example, depending on the example, some acts, events, or functions of any of the algorithms described herein can be performed in a different sequence, can be added, merged, or left out altogether (for example, not all described acts or events are necessary for the practice of the algorithms). Moreover, in some examples, acts or events can be performed concurrently, for example, through multi-threaded processing, interrupt processing, or multiple processors or processor cores, or on other parallel architectures, rather than sequentially. In addition, different tasks or processes can be performed by different machines and/or computing systems that can function together.

The various illustrative logical blocks and modules described in connection with the examples disclosed herein can be implemented or performed by a machine, such as a processing unit or processor, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A processor can be a microprocessor, but in the alternative, the processor can be a controller, microcontroller, or state machine, combination of the same, or the like. A processor can include electrical circuitry to process computer-executable instructions. In some examples, a processor includes an FPGA or other programmable device that performs logic operations without processing computer-executable instructions. A processor can also be implemented as a combination of computing devices, for example, a combination of a DSP and a microprocessor, a plurality of microprocessors, microprocessors in conjunction with a DSP core, or any other such configuration. Although described herein primarily with respect to digital technology, a processor may also include primarily analog components. A computing environment can include any type of computer system, including, but not limited to, a computer system based on a microprocessor, a mainframe computer, a digital signal processor, a portable computing device, a device controller, or a computational engine within an appliance, to name a few.

The elements of a method, process, routine, or algorithm described in connection with the embodiments disclosed herein can be embodied directly in hardware, in a software module executed by a processor device, or in a combination of the two. A software module can reside in RAM memory, flash memory, ROM memory, EPROM memory, EEPROM memory, registers, hard disk, a removable disk, a CD-ROM, or any other form of a non-transitory computer-readable storage medium. An exemplary storage medium can be coupled to the processor device such that the processor device can read information from, and write information to, the storage medium. In the alternative, the storage medium can be integral to the processor device. The processor device and the storage medium can reside in an ASIC. The ASIC can reside in a user terminal. In the alternative, the processor device and the storage medium can reside as discrete components in a user terminal.

The processes described herein or illustrated in the figures of the present disclosure may begin in response to an event, such as on a predetermined or dynamically determined schedule, on demand when initiated by a user or system administrator, or in response to some other event. When such processes are initiated, a set of executable program instructions stored on one or more non-transitory computer-readable media (e.g., hard drive, flash memory, removable media, etc.) may be loaded into memory (e.g., RAM) of a server or other computing device. The executable instructions may then be executed by a hardware-based computer processor of the computing device. In some embodiments, such processes or portions thereof may be implemented on multiple computing devices and/or multiple processors, serially or in parallel.

Conditional language such as, among others, "can," "could," "might" or "may," unless specifically stated otherwise, are otherwise understood within the context as used in general to convey that some examples include, while other examples do not include, some features, elements and/or steps. Thus, such conditional language is not generally intended to imply that features, elements and/or steps are in any way for examples or that examples necessarily include logic for deciding, with or without user input or prompting, whether these features, elements and/or steps are included or are to be performed in any particular example.

Disjunctive language such as the phrase "at least one of X, Y, or Z," unless specifically stated otherwise, is otherwise understood with the context as used in general to present that an item, term, etc., may be either X, Y, or Z, or any combination thereof (for example, X, Y, and/or Z). Thus, such disjunctive language is not generally intended to, and should not, imply that some examples require at least one of X, at least one of Y, or at least one of Z to each be present.

Any process descriptions, elements or blocks in the flow diagrams described herein and/or depicted in the attached figures should be understood as potentially representing modules, segments, or portions of code which include executable instructions for implementing specific logical functions or elements in the process. Alternate examples are included within the scope of the examples described herein in which elements or functions may be deleted, executed out of order from that shown, or discussed, including substantially concurrently or in reverse order, depending on the functionality involved as would be understood by those skilled in the art.

It should be emphasized that many variations and modifications may be made to the above-described examples, the elements of which are to be understood as being among other acceptable examples.

Any process descriptions, elements or blocks in the flow diagrams described herein and/or depicted in the attached figures should be understood as potentially representing modules, segments, or portions of code which include executable instructions for implementing specific logical functions or elements in the process. Alternate implementations are included within the scope of the examples described herein in which elements or functions may be deleted, executed out of order from that shown, or discussed, including substantially concurrently or in reverse order, depending on the functionality involved as would be understood by those skilled in the art.

Unless otherwise explicitly stated, articles such as "a" or "an" should generally be interpreted to include one or more described items. Accordingly, phrases such as "a device configured to" are intended to include one or more recited devices. Such one or more recited devices can also be collectively configured to carry out the stated recitations. For example, "a processor configured to carry out recitations A, B, and C" can include a first processor configured to carry out recitation A working in conjunction with a second processor configured to carry out recitations Band C.

## Claims

1. A first node for transmitting packets (1022, 1024, 1026) in an Ethernet based network, the first node comprising:
one or more processors comprising:
a first-in-first-out, FIFO, memory configured to store timing and status information associated with a plurality of links, wherein the first node is configured to transmit packets (1022, 1024, 1026) over the plurality of links to one or more other nodes using an Ethernet protocol; **characterized in that** the one or more processors further comprise:
a timer (1102) configured to tick according to a time period, wherein the timer (1102) is associated with the plurality of links; and
a logic circuitry configured to:
access entries of the FIFO memory (1104) based on respective ticks on the timer (1102); and
determine, based on the timing and status information associated with a first link of the plurality of links, to replay at least one packet associated with the first link, wherein the Ethernet protocol is lossy and
wherein the timer (1102) is configured to adjust the time period based on a number of active links that are associated with the entries of the FIFO memory (1104), wherein the active links are included in the plurality of links.

2. The first node of Claim 1, wherein the logic circuitry is configured to access the entries of the FIFO memory (1104) in a round-robin manner.

3. The first node of Claim 1, wherein the logic circuitry is configured to determine, based on the timing and status information associated with a second link of the plurality of links, to retire packets (1022, 1024, 1026) associated with the second link.

4. The first node of Claim 3, wherein the packets (1022, 1024, 1026) associated with the second link are stored in a local storage of the first node, and wherein the logic circuitry causes the local storage to discard the packets (1022, 1024, 1026) associated with the second link responsive to determining to retire the packets (1022, 1024, 1026) associated with the second link.

5. The first node of Claim 1, wherein the logic circuitry is configured to determine, based on the timing and status information associated with a second link of the plurality of links, to close the second link.

6. The first node of Claim 1, wherein the timing and status information associated with the first link of the plurality of links indicates that an acknowledgement of receiving the at least one packet associated with the first link has not been received by the first node over a threshold duration for replaying packets (1022, 1024, 1026).

7. The first node of any one of the preceding claims, wherein the Ethernet protocol is a transport layer hardware only Ethernet protocol, and
wherein the timer (1102) is configured to determine packets (1022, 1024, 1026) transmitted under the transport layer hardware only Ethernet protocol to replay.

8. The first node of Claim 7, wherein the first node transmits a first plurality of packets (1022, 1024, 1026) over the first link and a second plurality of packets (1022, 1024, 1026) over a second link according to the transport layer hardware only Ethernet protocol, and
Wherein the FIFO memory is configured to store timing and status information associated with the first link in a first entry of the FIFO memory, and timing and status information associated with the second link in a second entry of the FIFO memory.

9. The first node of Claim 8, wherein the hardware link timer comprises a timer (1102) associated with multiple links that ticks according to a time period, wherein the timer (1102) accesses entries of the FIFO memory (1104) in a round-robin manner ticks of the timer (1102), wherein the entries comprise the first entry and the second entry.

10. The first node of Claim 9, wherein the timer (1102) is configured to:
determine, based on the timing and status information associated with the first link stored in the first entry of the FIFO memory (1104), to replay at least some of the first plurality of packets (1022, 1024, 1026); and
determine, based on the timing and status information associated with the second link stored in the second entry of the FIFO memory (1104), to retire the second plurality of packets (1022, 1024, 1026).

11. A computer-implemented method implemented at a first node in an Ethernet based network, the computer-implemented method comprising:
storing (1302) timing and status information associated with a plurality of links in a first-in-first-out, FIFO, memory of the first node, wherein the first node is configured to transmit packets over the plurality of links to one or more other nodes using an Ethernet protocol; **characterized in that** the method further comprises:
accessing (1304) entries of the FIFO memory based on respective ticks of a hardware timer;
determining (1306), based on the timing and status information associated with a first link of the plurality of links, to replay at least one packet associated with the first link, wherein the Ethernet protocol is lossy; and
adjusting a time period of the hardware timer based on a number of active links that are associated with the entries of the FIFO memory, wherein the active links are included in the plurality of links.

12. The computer-implemented method of Claim 11, wherein the entries of the FIFO memory are accessed in a round-robin manner.

13. The computer-implemented method of Claim 11, further comprising:
determining, based on the timing and status information associated with a second link of the plurality of links, to retire packets associated with the second link.

14. The computer-implemented method of Claim 11, further comprising causing the at least one packet associated with the first link to be replayed.

15. The computer-implemented method of Claim 11, wherein the timing and status information associated with the first link of the plurality of links indicates that an acknowledgement of receiving the at least one packet associated with the first link has not been received by the first node over a threshold duration for replaying packets.

## Patentansprüche

1. Erster Knoten zum Übertragen von Paketen (1022, 1024, 1026) in einem Ethernetbasierten Netzwerk, wobei der erste Knoten Folgendes aufweist:
einen oder mehrere Prozessoren, die Folgendes aufweisen:
einen First-In-First-Out, FIFO,-Speicher, der dazu eingerichtet ist, einer Vielzahl von Verbindungen zugeordnete Zeit- und Statusinformationen zu speichern, wobei der erste Knoten dazu eingerichtet ist, Pakete (1022, 1024, 1026) über die Vielzahl von Verbindungen unter Verwendung eines Ethernet-Protokolls an einen oder mehrere andere Knoten zu übertragen; **dadurch gekennzeichnet, dass** der eine oder die mehreren Prozessoren ferner Folgendes aufweisen:
einen Zeitgeber (1102), der dazu eingerichtet ist, entsprechend eines Zeitintervalls zu ticken, wobei der Zeitgeber (1102) der Vielzahl von Verbindungen zugeordnet ist; und
einen Logikschaltkreis, der zu Folgendem eingerichtet ist:
Zugreifen auf Einträge des FIFO-Speichers (1104) basierend auf jeweiligen Ticks des Zeitgebers (1102); und
basierend auf den einer ersten Verbindung der Vielzahl von Verbindungen zugeordneten Zeit- und Statusinformationen, Bestimmen, mindestens ein der ersten Verbindung zugeordnetes Paket wieder einzuspielen, wobei das Ethernet-Protokoll verlustbehaftet ist, und
wobei der Zeitgeber (1102) dazu eingerichtet ist, basierend auf einer Anzahl aktiver Verbindungen, die den Einträgen des FIFO-Speichers (1104) zugeordnet sind, das Zeitintervall anzupassen, wobei die aktiven Verbindungen in der Vielzahl von Verbindungen enthalten sind.

2. Erster Knoten nach Anspruch 1, wobei der Logikschaltkreis dazu eingerichtet ist, auf die Einträge des FIFO-Speichers (1104) gemäß einer Round-Robin-Methode zuzugreifen.

3. Erster Knoten nach Anspruch 1, wobei der Logikschaltkreis dazu eingerichtet ist, basierend auf den einer zweiten Verbindung der Vielzahl von Verbindungen zugeordneten Zeit- und Statusinformationen zu bestimmen, der zweiten Verbindung zugeordnete Pakete (1022, 1024, 1026) ausscheiden zu lassen.

4. Erster Knoten nach Anspruch 3, wobei die der zweiten Verbindung zugeordneten Pakete (1022, 1024, 1026) in einem lokalen Speicher des ersten Knotens gespeichert sind, und wobei der Logikschaltkreis veranlasst, dass der lokale Speicher die der zweiten Verbindung zugeordneten Pakete (1022, 1024, 1026) verwirft, als Reaktion auf das Bestimmen, die der zweiten Verbindung zugeordneten Pakete (1022, 1024, 1026) ausscheiden zu lassen.

5. Erster Knoten nach Anspruch 1, wobei der Logikschaltkreis dazu eingerichtet ist, basierend auf den einer zweiten Verbindung der Vielzahl von Verbindungen zugeordneten Zeit- und Statusinformationen zu bestimmen, die zweite Verbindung zu schließen.

6. Erster Knoten nach Anspruch 1, wobei die der ersten Verbindung der Vielzahl von Verbindungen zugeordneten Zeit- und Statusinformationen angeben, dass über eine Schwellendauer für das Wiedereinspielen von Paketen (1022, 1024, 1026) hinweg keine Bestätigung des Empfangens des mindestens einen der ersten Verbindung zugeordneten Pakets durch den ersten Knoten empfangen wurde.

7. Erster Knoten nach einem der vorhergehenden Ansprüche, wobei das Ethernet-Protokoll ein rein auf Transportschicht-Hardware basierendes Ethernet-Protokoll ist, und
wobei der Zeitgeber (1102) dazu eingerichtet ist, zu bestimmen, Pakete (1022, 1024, 1026) wieder einzuspielen, die gemäß dem rein auf Transportschicht-Hardware basierenden Ethernet-Protokoll übertragen wurden.

8. Erster Knoten nach Anspruch 7, wobei der erste Knoten eine erste Mehrzahl von Paketen (1022, 1024, 1046) über die erste Verbindung und eine zweite Mehrzahl von Paketen (1022, 1024, 1026) über eine zweite Verbindung gemäß dem rein auf Transportschicht-Hardware basierenden Ethernet-Protokoll überträgt, und
wobei der FIFO-Speicher dazu eingerichtet ist, der ersten Verbindung zugeordnete Zeit- und Statusinformationen in einem ersten Eintrag des FIFO-Speichers und der zweiten Verbindung zugeordnete Zeit- und Statusinformationen in einem zweiten Eintrag des FIFO-Speichers zu speichern.

9. Erster Knoten nach Anspruch 8, wobei der Hardwareverbindungs-Zeitgeber einen Zeitgeber (1102) aufweist, der mehreren Verbindungen zugeordnet ist und entsprechend einem Zeitintervall tickt, wobei der Zeitgeber (1102) gemäß einer Round-Robin-Methode des Zeitgebers (1102) auf Einträge des FIFO-Speichers (1104) zugreift, wobei die Einträge den ersten Eintrag und den zweiten Eintrag aufweisen.

10. Erster Knoten nach Anspruch 9, wobei der Zeitgeber (1102) zu Folgendem eingerichtet ist:
Bestimmen, mindestens einen Teil der ersten Mehrzahl von Paketen (1022, 1024, 1026) wieder einzuspielen, basierend auf den der ersten Verbindung zugeordneten Zeit- und Statusinformationen, die im ersten Eintrag des FIFO-Speichers (1104) gespeichert sind; und
Bestimmen, die zweite Mehrzahl von Paketen (1022, 1024, 1026) ausscheiden zu lassen, basierend auf den der zweiten Verbindung zugeordneten Zeit- und Statusinformationen, die im zweiten Eintrag des FIFO-Speichers (1104) gespeichert sind.

11. Computerimplementiertes Verfahren, das an einem ersten Knoten in einem Ethernetbasierten Netzwerk implementiert wird, wobei das computerimplementierte Verfahren Folgendes umfasst:
Speichern (1302) von einer Vielzahl von Verbindungen zugeordneten Zeit- und Statusinformationen in einem First-In-First-Out, FIFO,-Speicher des ersten Knotens, wobei der erste Knoten dazu eingerichtet ist, Pakete über die Vielzahl von Verbindungen unter Verwendung eines Ethernet-Protokolls an einen oder mehrere Knoten zu übertragen; **dadurch gekennzeichnet, dass** das Verfahren ferner Folgendes umfasst:
Zugreifen (1304) auf Einträge des FIFO-Speichers basierend auf jeweiligen Ticks eines Hardware-Zeitgebers;
Bestimmen (1306), mindestens ein der ersten Verbindung zugeordnetes Paket wieder einzuspielen, basierend auf den einer ersten Verbindung der Vielzahl von Verbindungen zugeordneten Zeit- und Statusinformationen, wobei das Ethernet-Protokoll verlustbehaftet ist; und
Anpassen eines Zeitintervalls des Hardware-Zeitgebers basierend auf einer Anzahl aktiver Verbindungen, die den Einträgen des FIFO-Speichers zugeordnet sind, wobei die aktiven Verbindungen in der Vielzahl von Verbindungen enthalten sind.

12. Computerimplementiertes Verfahren nach Anspruch 11, wobei auf die Einträge des FIFO-Speichers gemäß einer Round-Robin-Methode zugegriffen wird.

13. Computerimplementiertes Verfahren nach Anspruch 11, das ferner Folgendes umfasst:
Bestimmen, der zweiten Verbindung zugeordnete Pakete ausscheiden zu lassen, basierend auf den einer zweiten Verbindung der Vielzahl von Verbindungen zugeordneten Zeit- und Statusinformationen.

14. Computerimplementiertes Verfahren nach Anspruch 11, ferner umfassend das Veranlassen, dass das der ersten Verbindung zugeordnete, mindestens eine Paket wieder eingespielt wird.

15. Computerimplementiertes Verfahren nach Anspruch 11, wobei die der ersten Verbindung der Vielzahl von Verbindungen zugeordneten Zeit- und Statusinformationen angeben, dass über eine Schwellendauer für das Wiedereinspielen von Paketen hinweg keine Bestätigung des Empfangens des mindestens einen der ersten Verbindung zugeordneten Pakets durch den ersten Knoten empfangen wurde.

## Revendications

1. Un premier nœud destiné à transmettre des paquets (1022, 1024, 1026) dans un réseau basé sur Ethernet, le premier nœud comprenant :
un ou plusieurs processeurs comprenant :
une mémoire FIFO (first-in-first-out) configurée pour stocker des informations de synchronisation et d'état associées à une pluralité de liaisons, dans lequel le premier nœud est configuré pour transmettre des paquets (1022, 1024, 1026) sur la pluralité de liaisons à un ou plusieurs autres nœuds en utilisant un protocole Ethernet ;
**caractérisé en ce que** le ou les processeurs comprennent en outre :
un temporisateur (1102) configuré pour générer des impulsions selon une période de temps, dans lequel le temporisateur (1102) est associé à la pluralité de liaisons ; et
un circuit logique configuré pour :
accéder à des entrées de la mémoire FIFO (1104) sur la base des impulsions respectives du temporisateur (1102) ; et
déterminer, sur la base des informations de synchronisation et d'état associées à une première liaison de la pluralité de liaisons, de rejouer au moins un paquet associé à la première liaison, dans lequel le protocole Ethernet est à perte et
dans lequel le temporisateur (1102) est configuré pour ajuster la période de temps sur la base d'un nombre de liaisons actives qui sont associées aux entrées de la mémoire FIFO (1104), dans lequel les liaisons actives sont incluses dans la pluralité de liaisons.

2. Le premier nœud selon la revendication 1, dans lequel le circuit logique est configuré pour accéder aux entrées de la mémoire FIFO (1104) selon un mode cyclique.

3. Le premier nœud selon la revendication 1, dans lequel le circuit logique est configuré pour déterminer, sur la base des informations de synchronisation et d'état associées à une seconde liaison de la pluralité de liaisons, de retirer des paquets (1022, 1024, 1026) associés à la seconde liaison.

4. Le premier nœud selon la revendication 3, dans lequel les paquets (1022, 1024, 1026) associés à la seconde liaison sont stockés dans une mémoire locale du premier nœud, et dans lequel le circuit logique amène la mémoire locale à supprimer les paquets (1022, 1024, 1026) associés à la seconde liaison en réponse à la détermination de retirer les paquets (1022, 1024, 1026) associés à la seconde liaison.

5. Le premier nœud selon la revendication 1, dans lequel le circuit logique est configuré pour déterminer, sur la base des informations de synchronisation et d'état associées à une seconde liaison de la pluralité de liaisons, de fermer la seconde liaison.

6. Le premier nœud selon la revendication 1, dans lequel les informations de synchronisation et d'état associées à la première liaison de la pluralité de liaisons indiquent qu'un accusé de réception de la réception d'au moins un paquet associé à la première liaison n'a pas été reçu par le premier nœud pendant une durée seuil pour rejouer des paquets (1022, 1024, 1026).

7. Le premier nœud selon l'une quelconque des revendications précédentes, dans lequel le protocole Ethernet est un protocole Ethernet de couche transport matériel uniquement, et dans lequel le temporisateur (1102) est configuré pour déterminer les paquets (1022, 1024, 1026) transmis selon le protocole Ethernet de couche transport matériel uniquement à rejouer.

8. Le premier nœud selon la revendication 7, dans lequel le premier nœud transmet une première pluralité de paquets (1022, 1024, 1026) sur la première liaison et une seconde pluralité de paquets (1022, 1024, 1026) sur une seconde liaison selon le protocole Ethernet de couche transport matériel uniquement, et
dans lequel la mémoire FIFO est configurée pour stocker l'information de synchronisation et l'information d'état associées au premier lien dans une première entrée (de mémoire) de la mémoire FIFO, et l'information de synchronisation et l'information d'état associées au second lien dans une seconde entrée (de mémoire) de la mémoire FIFO.

9. Le premier nœud selon la revendication 8, dans lequel le temporisateur matériel de liaison comprend un temporisateur (1102) associé à de multiples liaisons qui génère des impulsions selon une période de temps, dans lequel le temporisateur (1102) accède à des entrées de la mémoire FIFO (1104) selon un mode cyclique d'impulsions du temporisateur (1102), dans lequel les entrées comprennent la première entrée et la seconde entrée.

10. Le premier nœud selon la revendication 9, dans lequel le temporisateur (1102) est configuré pour :
déterminer, sur la base des informations de synchronisation et d'état associées à la première liaison stockées dans la première entrée de la mémoire FIFO (1104), de rejouer au moins une partie de la première pluralité de paquets (1022, 1024, 1026) ; et
déterminer, sur la base des informations de synchronisation et d'état associées à la seconde liaison stockées dans la seconde entrée de la mémoire FIFO (1104), de retirer la seconde pluralité de paquets (1022, 1024, 1026).

11. Un procédé mis en œuvre par ordinateur mis en œuvre à un premier nœud dans un réseau basé sur Ethernet, le procédé mis en œuvre par ordinateur comprenant :
stocker (1302) des informations de synchronisation et d'état associées à une pluralité de liaisons dans une mémoire FIFO (first-in-first-out) du premier nœud, dans lequel le premier nœud est configuré pour transmettre des paquets sur la pluralité de liaisons à un ou plusieurs autres nœuds en utilisant un protocole Ethernet ; **caractérisé en ce que** le procédé comprend en outre :
accéder (1304) à des entrées de la mémoire FIFO sur la base des impulsions respectives d'un temporisateur matériel ;
déterminer (1306), sur la base des informations de synchronisation et d'état associées à une première liaison de la pluralité de liaisons, de rejouer au moins un paquet associé à la première liaison, dans lequel le protocole Ethernet est à perte ; et
ajuster une période de temps du temporisateur matériel sur la base d'un nombre de liaisons actives qui sont associées aux entrées de la mémoire FIFO, dans lequel les liaisons actives sont incluses dans la pluralité de liaisons.

12. Le procédé mis en œuvre par ordinateur selon la revendication 11, dans lequel les entrées de la mémoire FIFO sont accédées selon un mode cyclique.

13. Le procédé mis en œuvre par ordinateur selon la revendication 11, comprenant en outre :
déterminer, sur la base des informations de synchronisation et d'état associées à une seconde liaison de la pluralité de liaisons, de retirer des paquets associés à la seconde liaison.

14. Le procédé mis en œuvre par ordinateur selon la revendication 11, comprenant en outre amener au moins un paquet associé à la première liaison à être rejoué.

15. Le procédé mis en œuvre par ordinateur selon la revendication 11, dans lequel les informations de synchronisation et d'état associées à la première liaison de la pluralité de liaisons indiquent qu'un accusé de réception de la réception d'au moins un paquet associé à la première liaison n'a pas été reçu par le premier nœud pendant une durée seuil pour rejouer des paquets.
